(19) Europäisches Patentamt
European Patent Office
Office européen des brevets

(11) **EP 4 715 556 A1**

(12) **EUROPEAN PATENT APPLICATION**
published in accordance with Art. 153(4) EPC

(43) Date of publication:
**25.03.2026  Bulletin 2026/13**

(51) International Patent Classification (IPC):
**G06F 3/04883** (2022.01)    **G06F 3/04845** (2022.01)
**G06F 3/044** (2006.01)

(21) Application number: **24830604.5**

(52) Cooperative Patent Classification (CPC):
**G06F 3/044; G06F 3/04845; G06F 3/04883**

(22) Date of filing: **20.06.2024**

(86) International application number:
**PCT/CN2024/100368**

(87) International publication number:
**WO 2025/001958 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.06.2023  CN 202310776953**

(71) Applicant: **Huawei Technologies Co., Ltd.
Shenzhen, Guangdong 518129 (CN)**

(72) Inventors:
• **CHAO, Hu**
  **Shenzhen, Guangdong 518129 (CN)**
• **ZHOU, Zhen**
  **Shenzhen, Guangdong 518129 (CN)**
• **DENG, Shuang**
  **Shenzhen, Guangdong 518129 (CN)**
• **FENG, Kun**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **HANDWRITING ELIMINATION APPARATUS AND METHOD FOR TOUCH SCREEN, AND ELECTRONIC STYLUS AND STYLUS CAP THEREOF**

(57)    This application provides a handwriting elimination apparatus and method for a touch screen, an electronic stylus pen, and a pen cap thereof. The handwriting elimination apparatus includes a trigger component and a strain component, and can be used in the electronic stylus pen. In this case, in a process in which an elimination action is performed on an image on the touch screen by using the handwriting elimination apparatus, a press portion transfers a force received due to contact between a trigger portion and the touch screen to a strain sensing assembly, and the strain sensing assembly undergoes deformation under a press force and generates an erasure signal corresponding to the deformation. When the force received due to the contact between the trigger portion and the touch screen changes, a deformation degree of the strain sensing assembly also changes correspondingly, and a corresponding erasure signal is generated. Different contact forces between the trigger portion and the touch screen enable the strain sensing assembly to generate different erasure signals. A user can adjust a magnitude of the contact force between the trigger portion and the touch screen to implement graded erasure on the image on the touch screen, thereby achieving different degrees of erasure effect.

FIG. 12a

## Description

This application claims priority to Chinese Patent Application No. 202310776953.6, filed with the China National Intellectual Property Administration on June 28, 2023 and entitled "HANDWRITING ELIMINATION APPARATUS AND METHOD FOR TOUCH SCREEN, ELECTRONIC STYLUS PEN, AND PEN CAP THEREOF", which is incorporated herein by reference in its entirety.

## TECHNICAL FIELD

This application relates to the field of electronic technologies, and in particular, to a handwriting elimination apparatus and method for a touch screen, an electronic stylus pen, and a pen cap thereof.

## BACKGROUND

A touch screen (touch screen), also referred to as a "touchscreen" or "touch panel", is a sensing liquid crystal display apparatus that can receive input signals from contacts and the like. When a graphic button on the screen is touched, vivid audio and video effects are created on an image of the liquid crystal display. The touch screen is mainly used for public information query, guidance and working, industrial control, military command, electronic games, song selection and dishes ordering, multimedia teaching, real estate presale, and the like.

With the continuous development of electronic technologies, the touch screen becomes the most common image-forming device in people's life. However, during actual use, a user may draw incorrect audio and video images due to accidental touches or some other unexpected cases. In this case, a handwriting elimination apparatus is required to eliminate the incorrect audio and video images.

In the conventional technology, there are several erasure methods as follows:

1. A stylus pen is turned by 180°, and a pen tail is pressed onto a screen to perform an erasure action. The pressed pen tail makes a contact inside the pen tail in contact with the screen to implement action recognition and trigger a program to call an eraser function to implement erasure.

2. A user taps or presses a specific touch region on an electronic stylus pen, and the stylus pen can detect a capacitance change in a touch input sensor within a period of time, and interpret the capacitance change as a gesture action of the user, to trigger an eraser function.

In the first erasure method, a same erasure trace appears under different erasure forces, resulting in poor erasure effect. In the second erasure method, a same erasure trace also appears under different erasure forces, resulting in poor erasure effect; a trigger position is usually at a front end of the stylus pen with a specific distance from a pen tip, recognition performed by an interactive program based on rhythmic finger tapping leads to a high probability of accidental touches, and consequently the electronic stylus pen is likely to unintentionally switch to the eraser function during writing.

Therefore, a handwriting elimination apparatus in the conventional technology has a problem of poor performance in use.

## SUMMARY

Embodiments of this application provide a handwriting elimination apparatus and method for a touch screen, an electronic stylus pen, and a pen cap thereof, and resolve a conventional-technology problem that a handwriting elimination apparatus has poor performance in use.

According to a first aspect, an embodiment of this application provides a handwriting elimination apparatus for a touch screen. The handwriting elimination apparatus includes a trigger component and a strain component, where

the trigger component includes a trigger portion in contact with the touch screen, and a press portion disposed on an inner side of the trigger portion;
the strain component includes a strain sensing assembly opposite to the press portion; and
the trigger portion is in contact with the touch screen and receives a force, and presses the strain sensing assembly through the press portion, the strain sensing assembly undergoes deformation under a press force applied by the press portion and generates an erasure signal corresponding to the deformation, and the erasure signal is for eliminating handwriting displayed on the touch screen.

According to the foregoing technical solution, when an elimination action is performed on an image on the touch screen by using the handwriting elimination apparatus, the press portion transfers a force received due to contact between the trigger portion and the touch screen to the strain sensing assembly, and the strain sensing assembly undergoes deformation under the press force and generates an erasure signal corresponding to the deformation. When the force received due to the contact between the trigger portion and the touch screen changes, a deformation degree of the strain sensing assembly also changes correspondingly, and a corresponding erasure signal is generated. In this process, different contact forces between the trigger portion and the touch screen enable the strain sensing assembly to generate different erasure signals. A user can adjust a magnitude of the contact force between the trigger portion and the touch screen to implement graded erasure on the image on the touch screen, thereby achieving different degrees of erasure effect, and helping improve performance of the handwriting elimination apparatus in use.

In some embodiments, the strain sensing assembly includes a strain substrate and a plurality of strain sensing elements, and the plurality of strain sensing elements are disposed on the strain substrate, where

the plurality of strain sensing elements are located in a same plane, a plane parallel to the plane in which the plurality of strain sensing elements are located is used as a projection plane, and the plurality of strain sensing elements are evenly arrayed in the projection plane; and

a projection of the press portion on the projection plane is located in an outer contour of projections of the plurality of strain sensing elements on the projection plane.

According to the foregoing technical solution, when receiving a press force at any position from the trigger portion, the press portion can apply the press force to the strain sensing assembly, so that the strain sensing assembly can generate a corresponding erasure signal when any position of the trigger portion is in contact with the touch screen, for performing a corresponding elimination action on handwriting displayed on the touch screen.

In addition, the strain sensing assembly is configured to include a plurality of strain sensing elements, and each strain sensing element can deform independently under a force. This can reduce a probability of an incorrect erasure signal generated due to deformation at another position of the strain sensing assembly that is affected by deformation at a specific position under a force.

Therefore, based on this structure, it can be ensured that the handwriting elimination apparatus has a large sensing range, and accuracy of performing an erasure action by the handwriting elimination apparatus can be improved, helping further improve performance of the handwriting elimination apparatus in use.

In some embodiments, the strain substrate is of a centrosymmetric structure as a whole; and

the press portion is configured as a protrusion structure protruding from the inner side of the trigger portion, a protrusion direction of the protrusion structure is perpendicular to the strain substrate, and a projection point of a geometric center of an end portion of the protrusion structure on the projection plane coincides with a geometric center point of the strain substrate.

According to the foregoing technical solution, the plurality of strain sensing elements are disposed on the strain substrate, and the strain substrate is of a centrosymmetric structure as a whole. In this way, the plurality of strain sensing elements can be arranged at various angles, so that when the trigger portion drives the press portion to press the strain sensing assembly at any angle, a corresponding strain sensing element in the strain sensing assembly can deform and generate a corresponding erasure signal, and then a user can perform a handwriting elimination action at any angle by using the handwriting elimination apparatus.

In addition, the press portion is configured as the protrusion structure protruding from the inner side of the trigger portion, and the projection point of the geometric center of the end portion of the protrusion structure on the projection plane coincides with the geometric center point of the strain substrate. In this way, when the press portion applies press forces to corresponding strain sensing elements at different angles, magnitudes of the press forces applied to the corresponding strain sensing elements are not affected due to changes of the press angle, and therefore erasure effect of the handwriting elimination apparatus cannot be affected.

In some embodiments, the strain substrate includes a plurality of substrate members disposed in pairs, and the plurality of substrate members are evenly arranged around the geometric center point of the strain substrate; and

every two strain sensing elements in the plurality of strain sensing elements form a pair of strain sensing elements, where at least one pair of strain sensing elements is attached to each substrate member in the plurality of substrate members.

According to the foregoing technical solution, when the trigger portion drives the press portion to apply press forces to corresponding strain sensing elements at different angles, the strain sensing elements undergo consistent deformation. This can reduce a probability that an erasure signal of the handwriting elimination apparatus is affected due to a large deformation difference between the strain sensing elements when the trigger portion is pressed at different angles, helping improve erasure accuracy of the handwriting elimination apparatus.

In some embodiments, each strain sensing element in the plurality of strain sensing elements is configured as a resistance strain gauge, one pair of resistance strain gauges is attached to each substrate member in the plurality of substrate members, and the pair of the resistance strain gauges on each substrate member is electrically connected to a corresponding pair of auxiliary resistors, to form a Wheatstone bridge circuit.

According to the foregoing technical solution, resistance strain gauges and a corresponding pair of auxiliary resistors are further electrically connected, so that each resistance strain gauge and a corresponding auxiliary resistor can form a half-bridge circuit of the Wheatstone bridge circuit, and interference between half-bridge circuits is small.

In addition, when a resistance value of the resistance strain gauge changes as a strain steel sheet deforms, because the auxiliary resistor is located outside the strain substrate, the auxiliary resistor remains unaffected and has no resistance change, and therefore can be used as a reference resistor.

In some embodiments, each strain sensing element in the plurality of strain sensing elements is configured as a resistance strain gauge, two pairs of resistance strain gauges are attached to each substrate member in the plurality of substrate members, and the two pairs of resistance strain gauges are electrically connected to form a Wheatstone bridge circuit; and

the two pairs of resistance strain gauges in each Wheatstone bridge are arranged annularly or side by side.

According to the foregoing technical solution, the resistance strain gauges are arranged annularly or side by side. In this way, when the strain steel sheet deforms at any angle and at any position, resistance values of the resistance strain gauges can change as the strain steel sheet deforms, helping improve sensitivity of the strain component.

In some embodiments, the strain substrate is configured as a strain steel sheet.

According to the foregoing technical solution, because a flexible printed circuit board is of a flexible structure and has a circuit structure integrated inside, after a plurality of times of pressing, the flexible printed circuit board may be damaged, and a circuit may be affected. This configuration can effectively protect the flexible printed circuit board and reduce a probability of failure of the flexible printed circuit board due to damage after a plurality of times of use.

In addition, when the strain steel sheet receives an impact force, a loss of transmitting the impact force is small, and a conversion rate of converting the impact force into deformation is high. Even when the strain steel sheet receives a small impact force, the resistance strain gauge can convert deformation into an electrical signal, and then generate an erasure signal of the handwriting elimination apparatus, helping improve sensitivity of the strain component.

In some embodiments, the strain sensing assembly further includes a flexible printed circuit board, the flexible printed circuit board includes a first part and a second part, the first part is stacked with the strain substrate and is attached to a side that is of the strain substrate and that faces away from the press portion, each strain sensing element in the plurality of strain sensing elements is attached to a surface that is of the first part and that faces away from the strain substrate, for the plurality of strain sensing elements to be disposed on the strain substrate by using the first part of the flexible printed circuit board, and the second part is bent and extends toward a side of the first part and is located outside the strain substrate.

In some embodiments, when the Wheatstone bridge circuit is formed in the handwriting elimination apparatus, the auxiliary resistor of the Wheatstone bridge circuit is disposed on the second part of the flexible printed circuit board.

In some embodiments, the handwriting elimination apparatus further includes a signal transmission component, and the signal transmission component is configured to send the erasure signal to an electronic device in which the touch screen is used.

In some embodiments, the handwriting elimination apparatus further includes a sensing electrode, the sensing electrode forms the press portion, and the sensing electrode is electrically connected to the second part of the flexible printed circuit board.

According to the foregoing technical solution, because many conductors are disposed inside the touch screen, the use of the sensing electrode can allow capacitance to be generated between the handwriting elimination apparatus in this application and the touch screen when the handwriting elimination apparatus approaches the touch screen. This process allows for interaction between the handwriting elimination apparatus and the touch screen with no other operations required, to enable an erasure function of the electronic device in which the touch screen is used, making it more convenient to use.

In some embodiments, the handwriting elimination apparatus further includes an insulating member, the insulating member is disposed between the sensing electrode and the strain sensing assembly, an end portion of the sensing electrode fits into a groove at a corresponding end portion of the insulating member, an end that is of the insulating member and that is away from the sensing electrode also forms a protruding structure aligned with the geometric center point of the strain substrate of the strain sensing assembly, and the trigger portion presses, when receiving a force, the strain substrate of the strain sensing assembly by using the protruding structure of the insulating member.

In some embodiments, a support is further included, the support has a hollow region or a recessed region, one end that is of each substrate member in the plurality of substrate members and that is away from the geometric center point is fastened to the support, and the other ends are connected to each other and are suspended in the hollow region or the recessed region of the support, to form an end-fixed beam structure.

In some embodiments, an outer surface of the trigger portion is provided with a soft protective layer.

In some embodiments, an outer shell is further included, the trigger component and the strain component are fastened into the outer shell, and the trigger portion is partially exposed from the outer shell.

In some embodiments, a part that is of the trigger portion and that is exposed from the outer shell is of a spherical segment structure, and a central angle of a cross-section of the spherical segment structure is in a range of 90° to 150°.

According to the foregoing technical solution, the trigger portion is configured to be of the spherical segment structure, and the central angle of the cross-section of the spherical segment structure is in the range of 90° to 150°. In this way, the handwriting elimination apparatus in this application can have a large erasure range.

According to a second aspect, an embodiment of this application further provides a pen cap of an electronic stylus pen, where the pen cap is disposed on a pen tail of the electronic stylus pen and is configured to perform an erasure function of the electronic stylus pen; and the pen cap includes the handwriting elimination apparatus for the touch screen with the foregoing structure.

According to the foregoing technical solution, the handwriting elimination apparatus of the foregoing structure is integrated into the pen cap of the electronic stylus pen. When implementing a handwriting elimination function, the handwriting elimination apparatus of the foregoing structure can achieve different degrees of erasure effect based on a magnitude of a press force, and can further implement multi-angle recognition for erasure. The use of this structure for the pen cap of the electronic stylus pen can improve functional diversity of the pen cap of the electronic stylus pen, and can further improve performance of the electronic stylus pen in use.

According to a third aspect, an embodiment of this application further provides an electronic stylus pen, including a pen barrel and a pen head disposed at one end of the pen barrel, and including the pen cap of the foregoing structure, where the pen cap is removably connected to the other end of the pen barrel.

According to the foregoing technical solution, because the pen cap of the foregoing structure can implement different degrees of multi-angle recognition based on a magnitude of a press force, when handwriting on the touch screen is eliminated, performance of the electronic stylus pen in use can be improved.

In addition, the pen cap is removably connected to the other end of the pen barrel. The pen cap can be used independently when implementing a handwriting elimination function, making it more convenient to use.

According to a fourth aspect, an embodiment of this application further provides a handwriting elimination method for a touch screen, applied to an electronic stylus pen, where an erasure function is performed by using the electronic stylus pen of the foregoing structure, and the handwriting elimination method for the touch screen includes:

receiving a feedback signal from an electronic device, in which the touch screen is used, that triggers the erasure function of the pen cap;

performing detection and sending electrical signal information indicating that the trigger portion receives a force; and

determining target pressure information of the pen cap based on the electrical signal information, and sending the target pressure information to the electronic device, for the electronic device to determine, based on the target pressure information, an erasure degree for handwriting displayed on the touch screen, where the target pressure information includes pressure magnitude information of the pen cap.

According to the foregoing technical solution, in the handwriting elimination method, the erasure degree for the handwriting displayed on the touch screen can be determined based on the pressure magnitude information of the pen cap, so that when a handwriting elimination function is performed by using the pen cap, different erasure effects can be achieved based on different magnitudes of erasure forces.

In some embodiments, the strain sensing assembly includes a strain substrate and a plurality of strain sensing elements, and the plurality of strain sensing elements are disposed on the strain substrate; and the plurality of strain sensing elements generate a plurality of pieces of electrical signal information based on a press force applied by the press portion, determine the target pressure information of the pen cap based on the plurality of pieces of electrical signal information, and send the target pressure information to the electronic device, for the electronic device to determine the erasure degree based on the target pressure information.

According to the foregoing technical solution, the target pressure information of the pen cap is determined based on the plurality of pieces of electrical signal information. In this way, accuracy of the target pressure information can be ensured. Even when an error occurs in a piece of electrical signal information, this method can reduce impact on the target pressure information.

In some embodiments, the plurality of strain sensing elements correspond to N Wheatstone bridge circuits, each Wheatstone bridge circuit outputs one bridge voltage, and the plurality of pieces of electrical signal information are N bridge voltages output by the N Wheatstone bridge circuits.

In some embodiments, that the pressure magnitude information of the pen cap of the electronic stylus pen is determined based on the plurality of pieces of electrical signal information includes:

determining current angle information of the pen cap based on the N bridge voltages, where the current angle information is calculated according to the following formula:

$$\theta = a\tan \frac{K\sqrt{\sum_{i}^{N/2}(V_{2i-1}-V_{2i})^2}}{\sum_{i}^{N}V_i},$$

where

$\theta$ represents an included angle between a current force direction of the pen cap and an axis of the pen cap; $V_{2i-1}$ and $V_{2i}$ respectively represent current bridge voltages output by two opposite Wheatstone bridge circuits, $1 \leq i \leq N$; and K is a correction coefficient;

determining current voltage information based on the N bridge voltages and the current angle information; and determining the pressure magnitude information based on the current voltage information and calibration information, where the calibration information indicates a one-to-one correspondence between different voltage information and different pressure information corresponding to a case in which the pen cap receives a force at a calibration angle, and the calibration angle is configured as an angle corresponding to a case in which a force direction of the pen cap coincides with the axis of the pen cap.

According to the foregoing technical solution, the current angle information of the pen cap is determined based on the N bridge voltages, the current voltage information is determined based on the N bridge voltages and the current angle information, and the pressure magnitude information is determined based on the current voltage information and the calibration information. In this way, erasure effect can be compensated based on different tilt angles of the pen cap (or this may be understood as that the tilt angle is calculated to provide compensation for an algorithm), so that the need for a large erasure force due to a weak signal at an edge of the pen cap is avoided, and consistent erasure effect can be achieved at different tilt angles under a same press force. This helps improve accuracy of performing a handwriting erasure action on the touch screen.

In some embodiments, before the feedback signal is received from the electronic device that triggers the erasure function, the method further includes: sending a trigger signal for enabling the erasure function.

This application has the following beneficial effects:

A handwriting elimination apparatus for a touch screen is provided. The handwriting elimination apparatus includes a trigger component and a strain component. The trigger component includes a trigger portion in contact with the touch screen, and a press portion disposed on an inner side of the trigger portion. The strain component includes a strain sensing assembly opposite to the press portion. The trigger portion is in contact with the touch screen and receives a force, and presses the strain sensing assembly through the press portion, the strain sensing assembly undergoes deformation under a press force applied by the press portion and generates an erasure signal corresponding to the deformation, and the erasure signal is for eliminating handwriting displayed on the touch screen.

When an elimination action is performed on an image on the touch screen by using the handwriting elimination apparatus, the press portion transfers a force received due to contact between the trigger portion and the touch screen to the strain sensing assembly, and the strain sensing assembly undergoes deformation under the press force and generates an erasure signal corresponding to the deformation. When the force received due to the contact between the trigger portion and the touch screen changes, a deformation degree of the strain sensing assembly also changes correspondingly, and a corresponding erasure signal is generated. In this process, different contact forces between the trigger portion and the touch screen enable the strain sensing assembly to generate different erasure signals. A user can adjust a magnitude of the contact force between the trigger portion and the touch screen to implement graded erasure on the image on the touch screen, thereby achieving different degrees of erasure effect, and helping improve performance of the handwriting elimination apparatus in use.

**BRIEF DESCRIPTION OF DRAWINGS**

FIG. 1a is a diagram of an electronic stylus pen on a touch screen in a writing state;
FIG. 1b is a diagram of an electronic stylus pen on a touch screen in an erasure state;
FIG. 2 is a photo showing erasure effect of a physical eraser;
FIG. 3a is an exploded view of a structure of a handwriting elimination apparatus according to an embodiment of this application;
FIG. 3b is a cross-sectional view of a structure of a handwriting elimination apparatus and a touch screen according to an embodiment of this application;

FIG. 3c is a diagram of a principle of a handwriting elimination apparatus in an unpressed state according to an embodiment of this application;

FIG. 3d is a diagram of a principle of a handwriting elimination apparatus in a pressed state according to an embodiment of this application;

FIG. 4a is a diagram of a structure of a strain sensing assembly according to an embodiment of this application;

FIG. 4b is a diagram of a structure of a strain component and a press portion according to an embodiment of this application;

FIG. 5a is a top view of a structure of a strain substrate in a first implementation according to an embodiment of this application;

FIG. 5b is a top view of a structure of a strain substrate in a second implementation according to an embodiment of this application;

FIG. 5c is a top view of a structure of a strain substrate in a third implementation according to an embodiment of this application;

FIG. 5d is a top view of a structure of a strain substrate in a fourth implementation according to an embodiment of this application;

FIG. 6a is a diagram of a structure of a strain substrate and resistance strain gauges according to an embodiment of this application;

FIG. 6b is a diagram of a structure of a flexible printed circuit board according to an embodiment of this application;

FIG. 7a is a diagram of a structure of a connection between a strain substrate and auxiliary resistors according to an embodiment of this application;

FIG. 7b is a circuit diagram of a Wheatstone bridge circuit;

FIG. 7c is a circuit diagram according to an embodiment of this application;

FIG. 8a is a diagram of a structure of a strain substrate according to an embodiment of this application;

FIG. 8b is a diagram of another structure of a strain substrate according to an embodiment of this application;

FIG. 8c is a circuit diagram according to another embodiment of this application;

FIG. 9a is a diagram of a structure of a resistance strain gauge according to an embodiment of this application;

FIG. 9b is a diagram of a structure of a resistance strain gauge according to another embodiment of this application;

FIG. 9c is a diagram of a strain principle of a resistance strain gauge according to an embodiment of this application;

FIG. 10 is a diagram of a structure of a connection between a sensing electrode and a flexible printed circuit board according to an embodiment of this application;

FIG. 11 is a diagram of a principle of capacitive sensing;

FIG. 12a is an exploded view of a structure of a handwriting elimination apparatus according to an embodiment of this application;

FIG. 12b is a cross-sectional view of a structure of a handwriting elimination apparatus according to an embodiment of this application;

FIG. 12c is a top view of a structure of a handwriting elimination apparatus according to an embodiment of this application;

FIG. 12d is a diagram of a structure of a strain component according to an embodiment of this application;

FIG. 12e is an axonometric diagram of a structure of a handwriting elimination apparatus according to an embodiment of this application;

FIG. 12f is a diagram of a handwriting elimination apparatus in a use state according to an embodiment of this application;

FIG. 13 is a partial cross-sectional view of a structure of a handwriting elimination apparatus according to an embodiment of this application;

FIG. 14a is a diagram of an assembled structure of a pen cap according to an embodiment of this application;

FIG. 14b is a cross-sectional view of a structure of a pen cap according to an embodiment of this application;

FIG. 15a is a diagram of an assembled structure of an electronic stylus pen according to an embodiment of this application;

FIG. 15b is a cross-sectional view of a structure of an electronic stylus pen according to an embodiment of this application;

FIG. 16a is a block diagram of a principle of a handwriting elimination method according to an embodiment of this application;

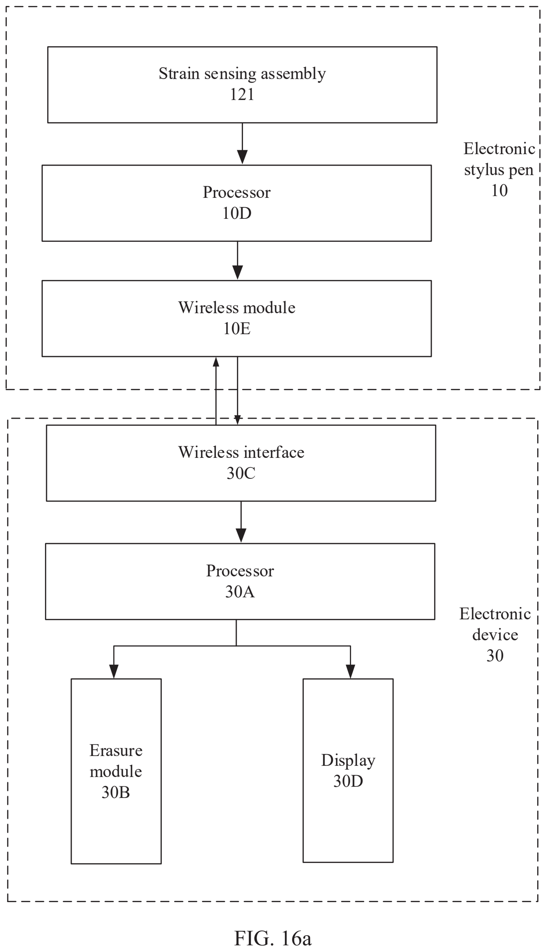

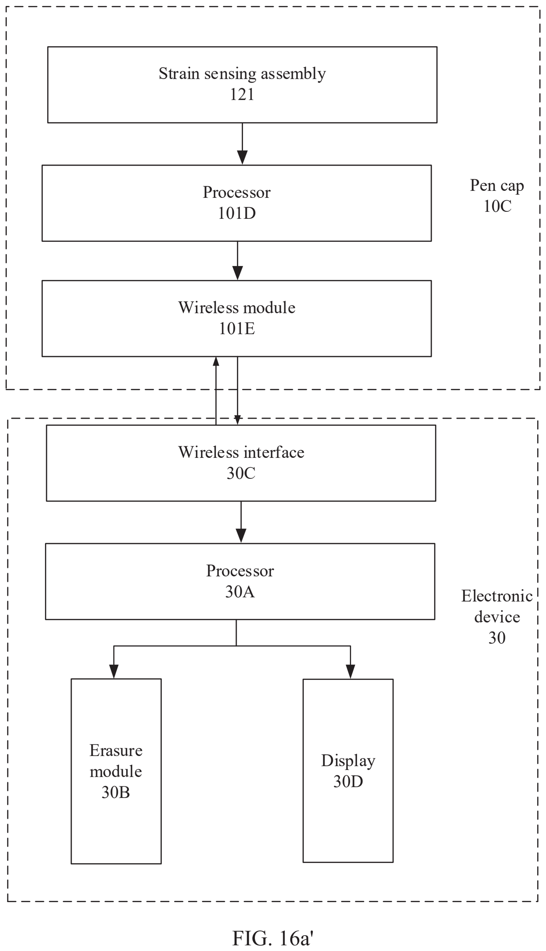

FIG. 16a' is a block diagram of another principle of a handwriting elimination method according to an embodiment of this application;

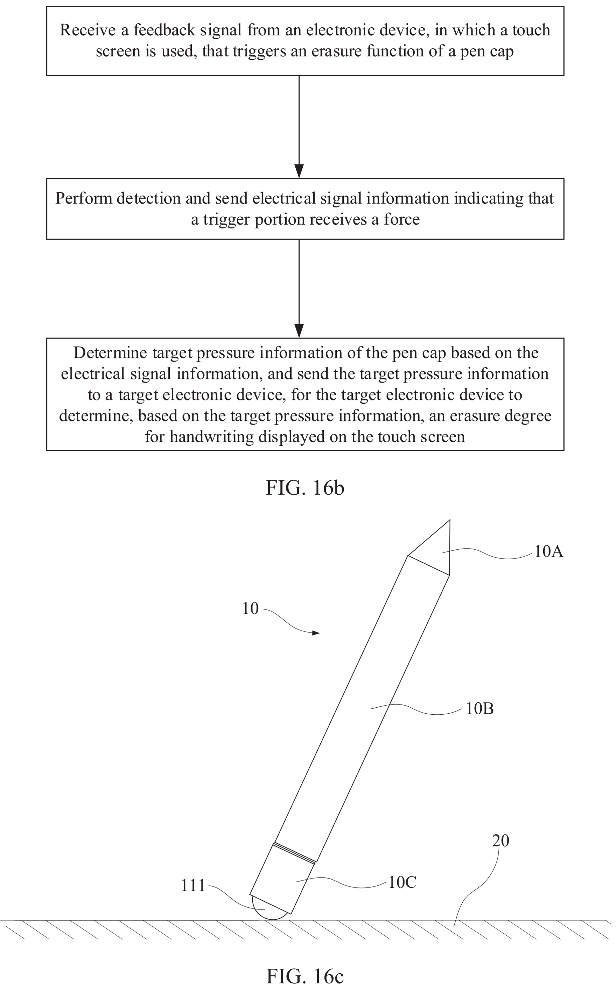

FIG. 16b is a flowchart of a handwriting elimination method according to an embodiment of this application;

FIG. 16c is a diagram of an application scenario of a handwriting elimination method according to an embodiment of this application;

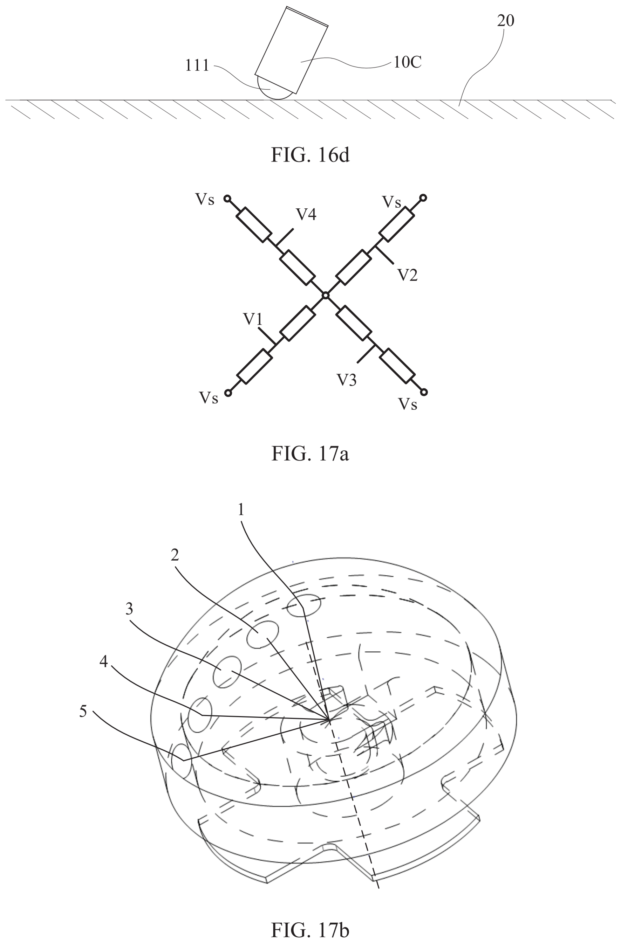

FIG. 16d is a diagram of another application scenario of a handwriting elimination method according to an embodiment of this application;
FIG. 17a is a diagram of a bridge circuit according to an embodiment of this application;
FIG. 17b is a diagram of a model of a pen cap according to an embodiment of this application; and

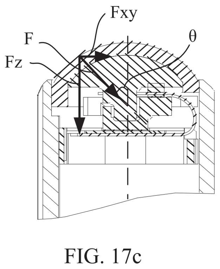

FIG. 17c is a diagram of force analysis on a point of a pen cap according to an embodiment of this application.

Reference numerals:

Reference numerals in the conventional technology:
10': electronic stylus pen; 10A': pen head; 10B': pen barrel; 10C': pen cap; 20': touch screen;

Reference numerals in this application:

10: electronic stylus pen; 10A: pen head; 10B: pen barrel; 10D: processor; 10E: wireless module;
10C: pen cap; 101D: processor; 101E: wireless module;
100: handwriting elimination apparatus; 110: trigger component; 111: trigger portion; 112: press portion; 1121: protrusion structure;
120: strain component; 121: strain sensing assembly; 1211: strain sensing element; 1211A: resistance strain gauge;
122: strain substrate; 1221: substrate member; 1222: strain steel sheet;
1223: flexible printed circuit board; 1223A: first part; 1223B: second part;
1224: auxiliary resistor; 122A: conductive foam; 123: support;
130A: sensing electrode; 140: insulating member; 141: groove; 142: protruding structure; 150: soft protective layer;
160: outer shell;
20: touch screen; 30: electronic device; 30A: processor; 30B: erasure module; 30C: wireless interface; 30D: display.

## DESCRIPTION OF EMBODIMENTS

A handwriting elimination apparatus for a touch screen in this application is configured to eliminate handwriting or an image on the touch screen. The touch screen is used in an electronic device. The electronic device may be, for example, a mobile phone, a tablet computer, a wearable device, an on-board device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or another electronic device. The touch screen may also be referred to as a touch panel, and the touch screen can implement a plurality of operations, such as sending a signal and receiving a signal. It should be understood that an interactive device may further include another unit or module. For example, if the interactive device is a smartphone, the interactive device may further include a speaker, a microphone, an optical sensor, and another module.

The handwriting elimination apparatus may be integrated into an electronic stylus pen that matches the touch screen, and the electronic stylus pen may be an active capacitive stylus. However, this is not limited in this application.

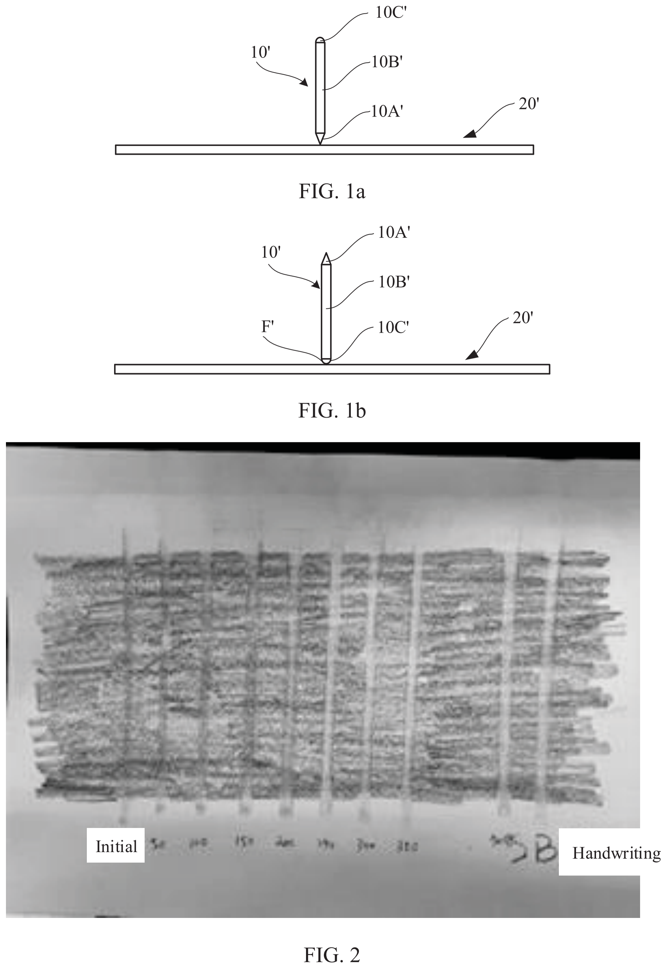

First, as shown in FIG. 1a and FIG. 1b, a usage scenario of the electronic stylus pen is described.

FIG. 1a is a diagram of an electronic stylus pen on a touch screen in a writing state. FIG. 1b is a diagram of an electronic stylus pen on a touch screen in an erasure state.

As shown in FIG. 1a and FIG. 1b, an electronic stylus pen 10' includes a pen barrel 10B', and a pen head 10A' and a pen cap 10C' that are respectively disposed at two ends of the pen barrel 10B', and a writing end is a part of the pen head 10A' and is configured to write or draw a graph on a touch screen 20'.

In the state shown in FIG. 1a, the electronic stylus pen 10' uses the pen head 10A' to write on the touch screen 20'. In this process, a user may draw incorrect audio and video images due to accidental touches or some other unexpected cases. In this case, a handwriting elimination apparatus is required to eliminate the incorrect audio and video images.

In this case, the electronic stylus pen 10' may be turned by 180°, so that the electronic stylus pen 10' is turned to the state shown in FIG. 1b, and the pen cap 10C at a pen tail of the electronic stylus pen 10 is used to eliminate the incorrect audio and video images.

Further, as shown in FIG. 1b, when the pen cap 10C at the pen tail of the electronic stylus pen 10' is used to eliminate the incorrect audio and video images, the user may rely on a past habit of using an eraser, as shown in FIG. 2. FIG. 2 is a photo showing erasure effect of a physical eraser. In a process of erasing handwriting made by a real pencil, different erasure traces appear under different erasure forces. Similarly, the user may control a press force F on the pen cap 10C' to achieve erasure effect.

However, in the conventional technology, a handwriting elimination apparatus for a touch screen or the pen cap 10C' at the pen tail of the electronic stylus pen 10' cannot implement this function and cannot meet a use requirement of the user, and has a problem of poor performance in use.

Based on this problem, embodiments of this application provide a handwriting elimination apparatus and method for a touch screen, an electronic stylus pen, and a pen cap thereof. When an elimination action is performed on an image on the touch screen by using the handwriting elimination apparatus, the press portion transfers a force received due to contact between the trigger portion and the touch screen to the strain sensing assembly, and the strain sensing assembly undergoes deformation under the press force and generates an erasure signal corresponding to the deformation. When the force received due to the contact between the trigger portion and the touch screen changes, a deformation degree of the strain sensing assembly also changes correspondingly, and a corresponding erasure signal is generated. In this process, different contact forces between the trigger portion and the touch screen enable the strain sensing assembly to generate different erasure signals. A user can adjust a magnitude of the contact force between the trigger portion and the touch screen to implement graded erasure on the image on the touch screen, thereby achieving different degrees of erasure effect, and helping improve performance of the handwriting elimination apparatus in use.

The following describes in detail a structure and an operating principle of the handwriting elimination apparatus provided in embodiments of this application with reference to the accompanying drawings.

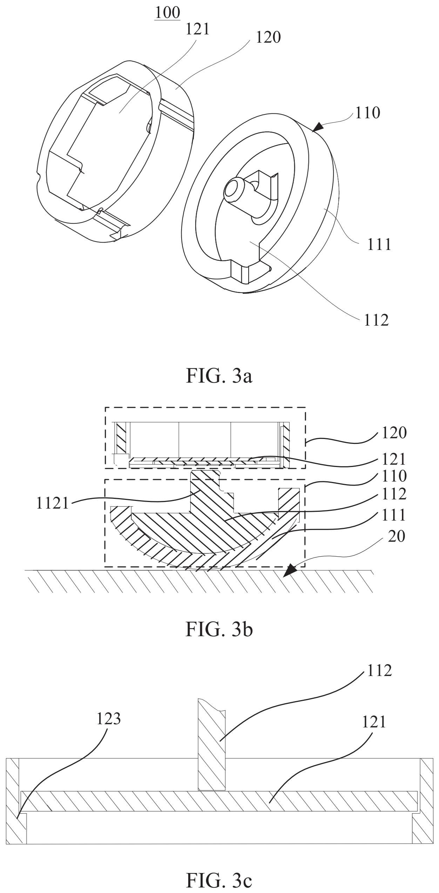

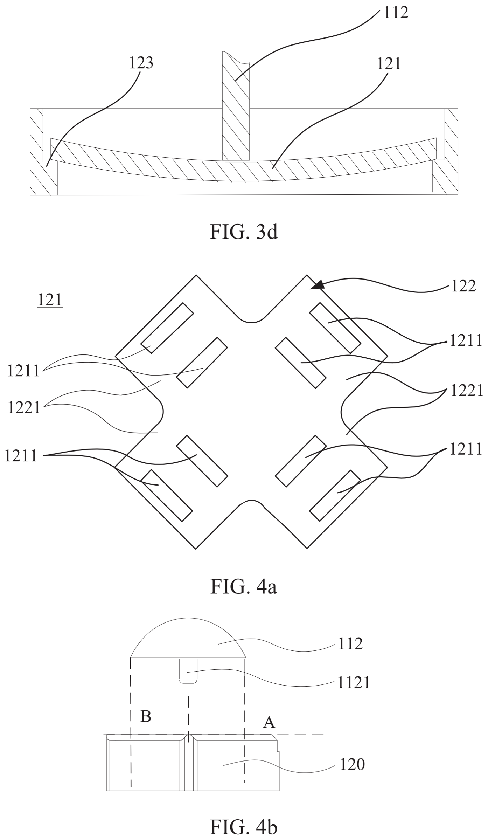

Refer to FIG. 3a to FIG. 3d. FIG. 3a is an exploded view of a structure of a handwriting elimination apparatus according to an embodiment of this application. FIG. 3b is a cross-sectional view of a structure of a handwriting elimination apparatus and a touch screen according to an embodiment of this application. FIG. 3c is a diagram of a handwriting elimination apparatus in an unpressed state according to an embodiment of this application. FIG. 3d is a diagram of a handwriting elimination apparatus in a pressed state according to an embodiment of this application.

As shown in FIG. 3a and FIG. 3b, an embodiment of this application provides a handwriting elimination apparatus 100, including a trigger component 110 and a strain component 120. The trigger component 110 includes a trigger portion 111 in contact with a touch screen 20, and a press portion 112 disposed on an inner side of the trigger portion 111. The strain component 120 includes a strain sensing assembly 121 opposite to the press portion 112.

As shown in FIG. 3c and FIG. 3d, during use, the press portion 112 presses the strain sensing assembly 121, the strain sensing assembly 121 undergoes deformation (the state shown in FIG. 3d) under a press force applied by the press portion 112 and generates an erasure signal corresponding to the deformation, and handwriting displayed on the touch screen 20 is eliminated based on the erasure signal. When the press portion 112 does not press the strain sensing assembly 121, the strain sensing assembly 121 returns to an initial state (the state shown in FIG. 3c).

It needs to be noted that, as shown in FIG. 3a and FIG. 3b, when an elimination action is performed on an image on the touch screen 20 by using the handwriting elimination apparatus 100, the press portion 112 transfers a force received due to contact between the trigger portion 111 and the touch screen 20 to the strain sensing assembly 121, and the strain sensing assembly 121 undergoes deformation under the press force and generates an erasure signal corresponding to the deformation. When the force received due to the contact between the trigger portion 111 and the touch screen 20 changes, a deformation degree of the strain sensing assembly 121 also changes correspondingly, and a corresponding erasure signal is generated. In this process, different contact forces between the trigger portion 111 and the touch screen 20 enable the strain sensing assembly 121 to generate different erasure signals based on the press force of different magnitudes. A user can adjust a magnitude of the contact force between the trigger portion 111 and the touch screen 20 to implement graded erasure on the image on the touch screen 20, thereby achieving different degrees of erasure effect, so that the erasure effect on the handwriting made by the pencil as shown in FIG. 2 can be achieved. This helps improve performance of the handwriting elimination apparatus 100 in use.

It needs to be understood that the erasure signal indicates a magnitude of a press force applied by the press portion 112 to the touch screen 20, and may be specifically sent as voltage information in a circuit.

Refer to FIG. 4a and FIG. 4b. FIG. 4a is a diagram of a structure of a strain sensing assembly according to an embodiment of this application. FIG. 4b is a diagram of a structure of a strain sensing assembly and a press portion according to an embodiment of this application.

As shown in FIG. 4a, the strain sensing assembly 121 includes a plurality of strain sensing elements 1211, and all the strain sensing elements 1211 are located in a same plane.

Further, the strain sensing assembly 121 further includes a strain substrate 122, all the strain sensing elements 1211 are disposed on the strain substrate 122, and the strain substrate 122 is of a centrosymmetric structure as a whole. It needs to be noted that the strain substrate 122 may be in another structure form, for example, may be configured to be of a non-centrosymmetric structure.

Further, the strain substrate 122 includes substrate members 1221 disposed in pairs, and the substrate members 1221 disposed in pairs are evenly arranged around a geometric center point of the strain substrate 122.

Further, as shown in FIG. 4b, a plane parallel to the plane in which all the strain sensing elements 1211 are located is used as a projection plane (the plane shown by A in the figure), and all the strain sensing elements 1211 are evenly arrayed in the projection plane. A projection of the press portion 112 on the projection plane (the region shown by B in the figure) is located in an outer contour of projections of all the strain sensing elements 1211 on the projection plane.

The press portion 112 is configured as a protrusion structure 1121 protruding from the inner side of the trigger portion 111, a protrusion direction of the protrusion structure 1121 is perpendicular to the strain substrate 122, and a projection point of a geometric center of an end portion of the protrusion structure 1121 on the projection plane coincides with a geometric center point of the strain substrate 122.

It needs to be noted that, based on the foregoing technical solution, when receiving a press force at any position from the trigger portion 111, the press portion 112 can apply the press force to the strain sensing assembly 121, so that the strain sensing assembly 121 can generate a corresponding erasure signal when any position of the trigger portion 111 is in contact with the touch screen 20, for performing a corresponding elimination action on handwriting displayed on the touch screen 20.

Further, each strain sensing element 1211 can deform independently under a force. This can reduce a probability of an incorrect erasure signal generated due to deformation at another position of the strain sensing assembly 121 that is affected by deformation at a specific position under a force. Based on this structure, it can be ensured that the handwriting elimination apparatus 100 has a large sensing range, and accuracy of performing an erasure action by the handwriting elimination apparatus 100 can be improved, helping further improve performance of the handwriting elimination apparatus 100 in use.

Further, in this application, the projection point of the geometric center of the end portion of the protrusion structure 1121 on the projection plane coincides with the geometric center point of the strain substrate 122. In this way, when the press portion 112 applies press forces to corresponding strain sensing elements 1211 at different angles, magnitudes of the press forces applied to the corresponding strain sensing elements 1211 are not affected due to changes of the press angle, and therefore erasure effect of the handwriting elimination apparatus 100 cannot be affected.

Further, in this application, all the strain sensing elements 1211 are disposed on the strain substrate 122, and the strain substrate 122 is of a centrosymmetric structure as a whole. In this way, the plurality of strain sensing elements 1211 can be arranged at various angles, so that when the trigger portion 111 drives the press portion 112 to press the strain sensing assembly 121 at any angle, a corresponding strain sensing element 1211 in the strain sensing assembly 121 can deform and generate a corresponding erasure signal, and then a user can perform a handwriting elimination action at any angle by using the handwriting elimination apparatus 100.

Further, it should be noted that a quantity of strain sensing elements 1211 included in the strain sensing assembly 121 is not limited in embodiments of this application. As shown in FIG. 4a, in an implementation, the strain sensing assembly 121 includes eight strain sensing elements 1211. In another alternative implementation, the strain sensing assembly 121 may include 16 strain sensing elements 1211, 24 strain sensing elements 1211, or the like, and the quantity may be specifically set according to actual design and use requirements.

Further, it should be noted that the quantity of strain sensing elements 1211 is set as an even multiple of a quantity of substrate members 1221. For example, when the quantity of substrate members 1221 is set to n, the quantity of strain sensing elements 1211 may be set to 2n, 4n, or 6n.

It needs to be noted that the quantity of substrate members 1221 is not limited, for example, may be set to 4, 6, or 8.

For example, when the quantity of substrate members 1221 is set to 4, the quantity of strain sensing elements 1211 should be set to 8, 16, or 24.

When the quantity of substrate members 1221 is set to 6, the quantity of strain sensing elements 1211 should be set to 12, 24, or 36.

When the quantity of substrate members 1221 is set to 8, the quantity of strain sensing elements 1211 should be set to 16, 34, or 48.

It needs to be noted that embodiments of this application show only some examples of configurations of the substrate members 1221 and the strain sensing elements 1211, and another quantity may be specifically set. This is not limited in embodiments of this application.

The following describes some of the foregoing examples with reference to the accompanying drawings.

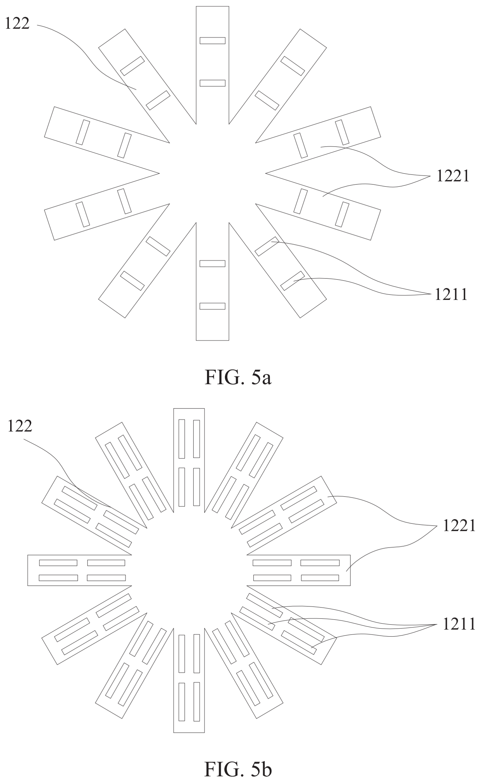

FIG. 5a is a top view of a structure of a strain substrate in a first implementation according to an embodiment of this application. As shown in FIG. 5a, the strain substrate 122 includes five pairs (10) of substrate members 1221, and each substrate member 1221 is provided with two strain sensing elements 1211, so that a total of 20 strain sensing elements 1211 are provided.

FIG. 5b is a top view of a structure of a strain substrate in a second implementation according to an embodiment of this application. As shown in FIG. 5b, the strain substrate 122 includes five pairs (10) of substrate members 1221, and each substrate member 1221 is provided with four strain sensing elements 1211, so that a total of 40 strain sensing elements 1211 are provided.

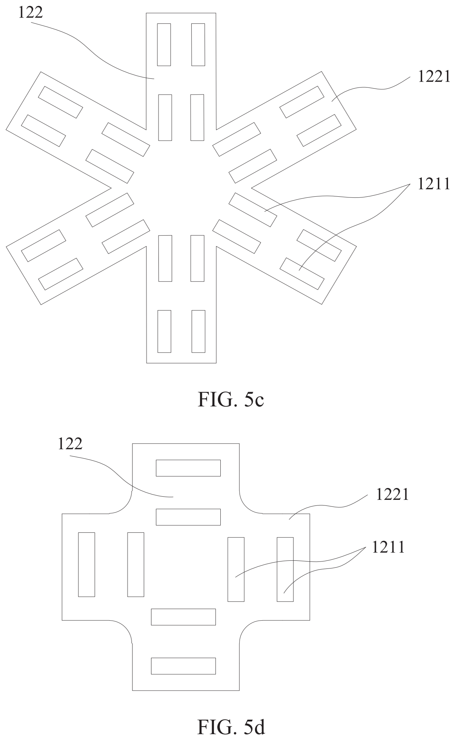

FIG. 5c is a top view of a structure of a strain substrate in a third implementation according to an embodiment of this application.

As shown in FIG. 5c, the strain substrate 122 includes three pairs (6) of substrate members 1221, and each substrate member 1221 is provided with four strain sensing elements 1211, so that a total of 24 strain sensing elements 1211 are provided.

FIG. 5d is a top view of a structure of a strain substrate in a fourth implementation according to an embodiment of this application. As shown in FIG. 5d, the strain substrate 122 includes two pairs (4) of substrate members 1221, and each substrate member 1221 is provided with two strain sensing elements 1211, so that a total of 8 strain sensing elements 1211 are provided.

It needs to be noted that a specific structure of the strain substrate 122 is not limited, and the strain substrate 122 may be made of a material capable of elastic deformation, for example, may be made of an elastic material such as metal, alloy, or ceramic. The trigger component 110 deforms under a press force, and the strain substrate 122 also deforms under an action force of the trigger component 110 and generates an elastic restoring force. The elastic restoring force can act back on the trigger component 110, helping the trigger component 110 return to an original position.

Further, a specific type of the strain sensing element 1211 is not limited. The strain sensing element 1211 may be a sensing element whose resistance changes with an action force, and can convert strain, pressure, tension, gravity, and other physical quantities into resistance changes, to measure these physical quantities. The strain sensing element 1211 is a sensing element that can convert a strain or strain difference signal into an electrical signal, and can measure a static press force. In a range of the press force, the signal output by the strain sensing element 1211 is directly proportional to the press force borne by the strain substrate 122. In an example, the strain sensing element 1211 may be a resistance strain gauge 1211A.

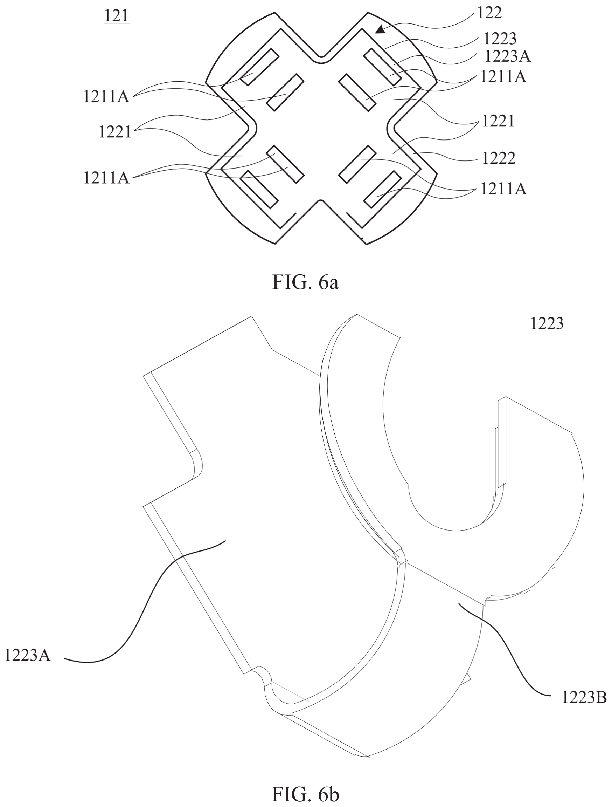

Further, in some embodiments of this application, FIG. 6a is a diagram of a structure of a strain substrate and resistance strain gauges according to an embodiment of this application; and FIG. 6b is a diagram of a structure of a flexible printed circuit board according to an embodiment of this application. As shown in FIG. 6a, the strain substrate 122 is configured as a strain steel sheet 1222, and the strain sensing assembly 121 further includes a flexible printed circuit board 1223, the strain steel sheet 1222 and the flexible printed circuit board 1223 are stacked, and the strain sensing element is configured as a resistance strain gauge 1211A attached to a side that is of the flexible printed circuit board 1223 and that is away from the strain steel sheet 1222. The strain steel sheet 1222 is closer to the press portion 112 than the flexible printed circuit board 1223.

Further, the resistance strain gauge 1211A may alternatively be disposed between the strain steel sheet 1222 and the flexible printed circuit board 1223, or may be directly attached to the strain steel sheet 1222. This is not limited in this application.

It needs to be noted that, a specific structure of the strain steel sheet 1222 is not limited. The strain steel sheet 1222 can support the flexible printed circuit board 1223. Because the flexible printed circuit board 1223 is of a flexible structure and has a circuit structure integrated inside, after a plurality of times of pressing, the flexible printed circuit board 1223 may be damaged, and a circuit may be affected. This configuration can effectively protect the flexible printed circuit board 1223 and reduce a probability of failure of the flexible printed circuit board 1223 due to damage after a plurality of times of use.

During use, when the strain steel sheet 1222 receives an impact force, a loss of transmitting the impact force is small, and a conversion rate of converting the impact force into deformation is high. Even when the strain steel sheet 1222 receives a small impact force, the resistance strain gauge 1211A can convert deformation into an electrical signal, and then generate an erasure signal of the handwriting elimination apparatus 100, helping improve sensitivity of the strain component 120.

Further, as shown in FIG. 6a and FIG. 6b, the flexible printed circuit board 1223 includes a first part 1223A and a second part 1223B. The first part 1223A is stacked with the strain substrate 122 and is attached to a side that is of the strain substrate 122 and that faces away from the press portion 112. All the strain sensing elements 1211 are attached to a surface that is of the first part 1223A and that faces away from the strain substrate 122. The second part 1223B is bent and extends toward a side of the first part 1223A and is located outside the strain substrate 122.

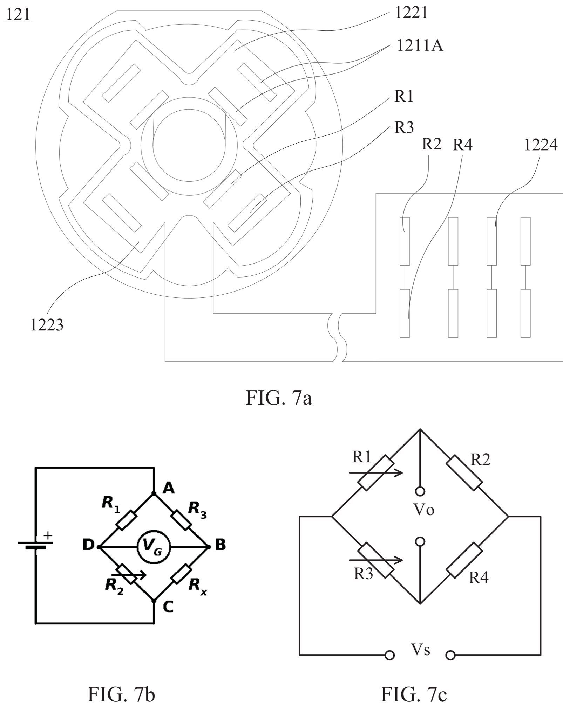

As shown in FIG. 7a, FIG. 7a is a diagram of a structure of a connection between a strain substrate and auxiliary resistors according to an embodiment of this application. In some implementations of this application, one pair of resistance strain gauges 1211A is attached to each substrate member 1221, and the resistance strain gauges 1211A on each substrate member 1221 is further electrically connected to a corresponding pair of auxiliary resistors 1224, to form a Wheatstone bridge circuit.

It needs to be noted that, each pair of resistance strain gauges 1211A is configured to be further electrically connected to a corresponding pair of auxiliary resistors 1224, and each pair of auxiliary resistors 1224 may be resistors integrated into the second part 1223B of the flexible printed circuit board 1223, or may be disposed at another position of the flexible printed circuit board 1223, or may not be disposed on the flexible printed circuit board 1223, as long as each pair of auxiliary resistors 1224 is electrically connected to corresponding resistance strain gauges 1211A. This application does not impose a unique requirement on a configuration manner.

Based on the foregoing configuration, each resistance strain gauge 1211A and a corresponding auxiliary resistor 1224 can form a half-bridge circuit of the Wheatstone bridge circuit, and interference between half-bridge circuits is small.

Further, it needs to be noted that a Wheatstone bridge circuit (in English: Wheatstone bridge, also referred to as a Wheatstone bridge) is configured to accurately measure a resistance value of an unknown resistor.

FIG. 7b is a circuit diagram of a Wheatstone bridge circuit. As shown in FIG. 7b, R1, R2, R3, and Rx are resistors on four bridge arms, Rx is a resistor to be tested, and G is a galvanometer. The four resistors are connected into a quadrilateral, and are referred to as four arms of the bridge. The galvanometer is connected onto one diagonal line of the quadrilateral, and is referred to as a "bridge". A direct-current power supply is connected onto the other diagonal line of the quadrilateral.

When the power supply is turned on, currents pass through all branches of the bridge circuit. When potentials at two points B and D are not equal, the current Ig in the bridge circuit is not equal to 0, and an indicating needle of the galvanometer deflects. When the potentials at the two points B and D are equal, the current Ig in the bridge circuit is equal to 0, and the indicating needle of the galvanometer points to zero (the zero point of the galvanometer is at the center of a dial), that is, the bridge is in a balanced state. Based on the circuit, R1, R2, and R3 are all known, and then a resistance value of the to-be-tested resistor Rx can be calculated.

FIG. 7c is a circuit diagram according to an embodiment of this application. With reference to FIG. 7a and FIG. 7c, the substrate member 1221 of the strain substrate 122 deforms when receiving a press force, so that the resistance strain gauge 1211A disposed on the substrate member 1221 also deforms correspondingly and changes in resistance. To be specific, when resistance values of a resistor R1 and a resistor R3 (corresponding to two resistance strain gauges 1211A on a same substrate member 1221) change as the resistance strain gauges 1211A deform, because each pair of auxiliary resistors 1224 is located outside the substrate member 1221 of the strain substrate 122, resistance values of the auxiliary resistors 1224 do not change, that is, a resistor R2 and a resistor R4 remain unaffected and have no resistance change, and therefore can be used as reference resistors.

In the examples of FIG. 7a and FIG. 7c, four full-bridge circuits are designed. One half-bridge circuit is configured on each arm (that is, each substrate member 1221), a total of four half bridges; and correspondingly, the other four half bridges are configured on a back-end circuit (for example, configured on the second part 1223B of the flexible printed circuit board 1223).

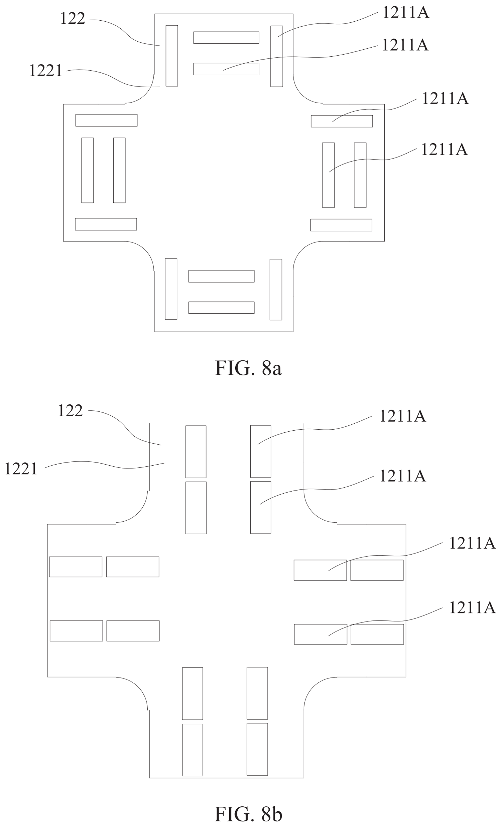

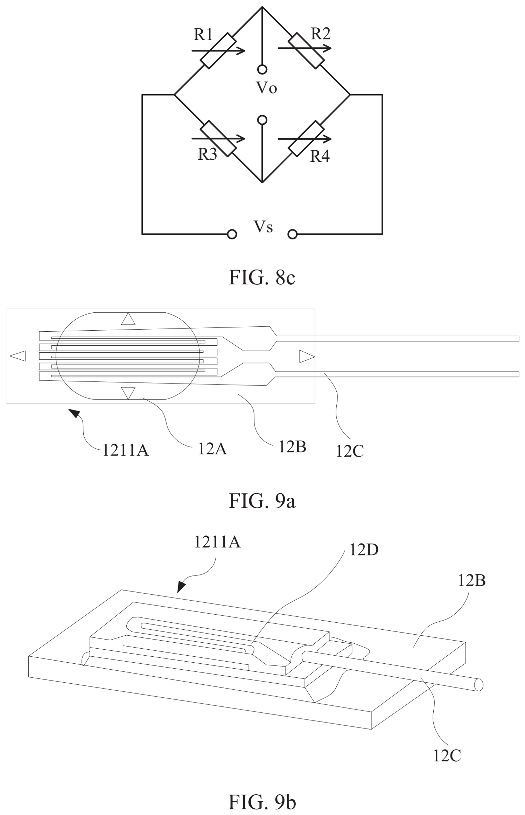

Refer to FIG. 8a to FIG. 8c. FIG. 8a is a diagram of a structure of a strain substrate according to an embodiment of this application. FIG. 8b is a diagram of another structure of a strain substrate according to an embodiment of this application. FIG. 8c is a circuit diagram according to another embodiment of this application.

As shown in FIG. 8a, two pairs of resistance strain gauges 1211A are attached to each substrate member 1221, every two pairs of resistance strain gauges 1211A are electrically connected to form a Wheatstone bridge circuit, and two pairs of resistance strain gauges 1211A in each Wheatstone bridge are arranged annularly.

As shown in FIG. 8b, two pairs of resistance strain gauges 1211A are attached to each substrate member 1221, every two pairs of resistance strain gauges 1211A are electrically connected to form a Wheatstone bridge circuit, and two pairs of resistance strain gauges 1211A in each Wheatstone bridge are arranged side by side.

In the examples of FIG. 8a and FIG. 8b, four full-bridge circuits are designed, with one full-bridge circuit configured on each arm (that is, each substrate member 1221).

As shown in FIG. 8a to FIG. 8c, when an external force acts on a pen cap, and a resistance value of the resistance strain gauge 1211A changes as the substrate member 1221 deforms, a resistor R1, a resistor R2, a resistor R3, and a resistor R4 that correspond to the resistance strain gauges 1211A on cross-shaped bridge arms change in resistance due to strain.

It needs to be noted that the resistance strain gauges 1211A are arranged annularly or side by side. In this way, when the substrate member 1221 deforms at any angle and at any position, resistance values of the resistance strain gauges 1211A can change as the substrate member 1221 deforms, helping improve sensitivity of the strain component.

Further, it needs to be noted that, in embodiments of this application, a quantity of resistance strain gauges 1211A is not limited to two pairs, may be three pairs, four pairs, or the like. The quantity may be specifically set according to actual design and use requirements.

It needs to be noted that the resistance strain gauge is an element configured to measure strain, and can convert a strain change on a mechanical component into a resistance change. In this application, a specific structure of the resistance strain gauge is not limited. The following describes a structure and an operating principle of the resistance strain gauge provided in embodiments of this application with reference to the accompanying drawings.

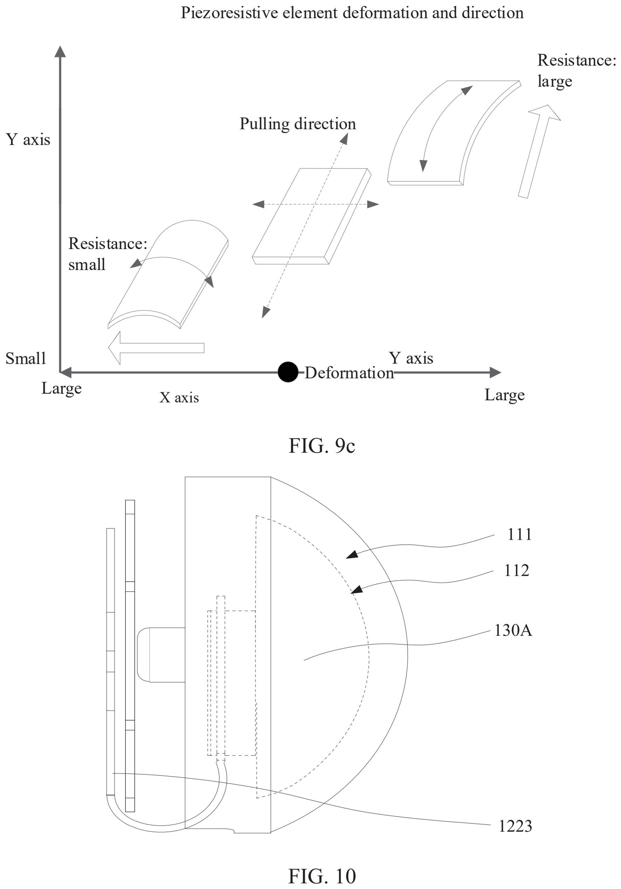

Refer to FIG. 9a to FIG. 9c. FIG. 9a is a diagram of a structure of a resistance strain gauge according to an embodiment of this application. FIG. 9b is a diagram of a structure of a resistance strain gauge according to another embodiment of this application. FIG. 9c is a diagram of a strain principle of a resistance strain gauge according to an embodiment of this application.

As shown in FIG. 9a, the resistance strain gauge 1211A includes a grid-shaped sensitive grid 12A formed by winding a constantan wire or a nichrome wire with $\Phi$ (diameter) = 0.02 mm to 0.05 mm, the sensitive grid 12A is fastened to a substrate 12B, and the constantan wire or the nichrome wire is connected to an external circuit by a conducting wire 12C. The conducting wire 12C is connected to the strain gauge wire grid by using a silver-plated copper wire.

As shown in FIG. 9b, very thin metal foil 12D is etched into the resistance strain gauge 1211A to form a grid shape, and is formed on a substrate 12B, and the metal foil 12D is connected to an external circuit by a conducting wire 12C. The conducting wire 12C is connected to the metal foil 12D by using a silver-plated copper wire.

It needs to be noted that, after grid shapes are formed on the resistance strain gauges of the foregoing two structures, the resistance strain gauges are each sandwiched between two layers of insulating sheets.

Further, as shown in FIG. 9c, the resistance strain gauge is based on a principle that a material changes in resistance under mechanical stress. Specifically, a measurement principle of the resistance strain gauge is as follows: A resistance value of a metal wire is related to material properties, and is also related to a length and a cross-sectional area of the metal wire. The metal wire is attached to a component. When the component receives a force and deforms, the length and the cross-sectional area of the metal wire also change with the component, and then the resistance changes. A resistance change rate ΔR/R of the resistance strain gauge is converted into a voltage output, and then the voltage output is amplified by an amplification circuit for measurement.

$$dR/R = Ks*\varepsilon,$$

where

Ks is a sensitivity coefficient of the material and has physical significance of a resistance change rate per unit strain, indicating whether the effect of the resistance strain gauge with these wire materials is significant; and $\varepsilon$ is strain at a measurement point and is a dimensionless quantity, but is still expressed conventionally in the unit of microstrain with a common symbol $\mu\varepsilon$.

Therefore, when the metal wire undergoes strain effect, the strain $\varepsilon$ and the resistance change rate dR/R are in a linear relationship. This is the theoretical basis for measuring the strain of the component by using the metal strain gauge.

Further, a deformation capability of the resistance strain gauge is related to a value of elastic modulus of the resistance strain gauge. Specifically, the elastic modulus is a mathematical description of an elastic deformation (non-permanent deformation) trend of an object to which an external force is applied. The elastic modulus may be considered as an indicator for measuring difficulty in elastic deformation of a material. A larger value of the elastic modulus indicates larger stress required by the material to undergo specific elastic deformation. In other words, larger rigidity of the material indicates smaller elastic deformation under specific stress.

Further, it needs to be noted that, in an embodiment of this application, attaching the resistance strain gauge 1211A to the substrate member 1221 may include the following steps:

Before attachment, a resistance strain gauge to be used is subjected to appearance inspection and resistance measurement. The appearance inspection may be performed with naked eyes or with a magnifier to check whether a sensitive grid has rust spots, defects, whether the sensitive grid is neatly arranged, whether a substrate and a cover layer are damaged, and whether a lead is intact. The resistance measurement is performed by using a JM3840 1/4 bridge to check whether the sensitive grid is open-circuited or short-circuited, and perform resistance sorting. A resistance difference between a group of resistance strain gauges that share temperature compensation cannot exceed ±0.5. Sensitivity coefficients of the resistance strain gauges measured in a same batch have to be the same.

For a metal component, for example, a steel component, paint, an oxide layer, and dirt are first removed from its surface; and then the surface is ground or filed, and is polished by using fine sandpaper. This process is usually referred to as "polishing". Polishing finish should be about ∇5. Some lines need to be made crosswise at 45° on a very smooth component by using fine sandpaper, to enhance adhesion. A polishing area is about five times an area of a resistance strain gauge. After polishing, an accurate position for attachment is marked gently by using a needle. A last process of surface treatment is cleaning. To be specific, the position for attachment is wiped and cleaned repeatedly with clean cotton gauze or absorbent cotton balls dipped in acetone or another volatile solvent, until no dirt is found on the cotton ball.

An attachment process varies depending on an adhesive used. An attachment process using 502 glue is as follows: after a cleaning agent volatilizes, a drop of 502 glue is first applied to the position for attachment, the glue is spread evenly by using the back of the resistance strain gauge, and then the resistance strain gauge is moved by using tweezers to adjust its position and angle. After positioning, a layer of polyethylene or tetrafluoroethylene film is placed on the resistance strain gauge, and excess glue and bubbles are gently squeezed out using fingers, until the glue is preliminarily cured.

After the adhesive is preliminarily cured, a wire can be soldered. For room-temperature static measurement, a double-core stranded copper plastic wire may be used as a conducting wire. For dynamic measurement, a three-core or four-core shielded cable may be used as a conducting wire. The resistance strain gauge is connected to the conducting wire by a wiring terminal, and it is ensured that there is no cold solder joint.

Whether the position for attachment is correct, whether the strain gauge is damaged, whether the adhesion is secure, and whether there are bubbles are checked. The resistance is measured to check whether there is an open circuit or a loop. Insulation resistance is the most important indicator to be checked. Insulation quality depends on the substrate of the resistance strain gauge. The resistance strain gauge with poor adhesion or insufficient curing usually has low insulation resistance.

Finally, the insulation resistance and bonding strength of the strain gauge are reduced due to exposure to damp, even causing corrosion of the sensitive grid in severe cases. The ingress of acids, alkalis, and oils even changes physical properties of the substrate and the adhesive. To prevent the ingress of free moisture, rain, and dew in the atmosphere, and prevent the ingress of acids, alkalis, oils, and other contaminants in particular environments, a protective layer is applied to a fully dried and cured resistance strain gauge with a conducting wire soldered.

The protective layer is made of a protective agent, such as Vaseline, lime, gun oil, rosin mixtures, or epoxy resin.

Further, it needs to be noted that, as shown in FIG. 7a and FIG. 7c, in an embodiment of this application, the resistance strain gauge 1211A generates electrical signal information under a press force based on the following principle:

$$\frac{V_O}{V_S} = \frac{1}{4} GF(\varepsilon_1 - \varepsilon_2 + \varepsilon_3 - \varepsilon_4),$$

where

VO represents a to-be-detected voltage; VS represents a given circuit excitation voltage and is a fixed value; GF represents a sensitivity coefficient of a relationship between a resistance change rate and strain, and is a constant; $\varepsilon 1$ and $\varepsilon 2$ represent strain in a strain region on a lower surface of a substrate member 1221 (that is, a single arm); and $\varepsilon 3$ and $\varepsilon 4$ represent strain of a reference resistor on a back-end strain gauge, with a value that should be 0. When the resistance strain gauge 1211A deforms under a force, a corresponding voltage change can be obtained according to the foregoing formula.

It needs to be understood that a voltmeter may be disposed in the Wheatstone circuit, the to-be-detected voltage $V_0$ is detected by using the voltmeter, and the voltmeter may be integrated into the flexible printed circuit board 1223 or may be disposed at another position. Embodiments of this application do not impose a unique requirement on this.

FIG. 10 is a diagram of a structure of a connection between a sensing electrode and a flexible printed circuit board according to an embodiment of this application. In some implementations of this application, as shown in FIG. 10, in some implementations of this application, the handwriting elimination apparatus 100 further includes a signal transmission component (not shown in the figure), and the signal transmission component is configured to send the erasure signal to an electronic device in which the touch screen 20 is used.

It needs to be understood that the signal transmission component may be a wireless transmission module, for example, may be a Bluetooth module. When the handwriting elimination apparatus 100 performs a handwriting elimination action, the handwriting elimination apparatus 100 establishes, through Bluetooth, a connection with the electronic device in which the touch screen 20 is used, and sends, in real time through the Bluetooth, the erasure signal to the electronic device in which the touch screen 20 is used.

Further, the handwriting elimination apparatus 100 includes a sensing electrode 130A, the sensing electrode 130A forms the press portion 112, and the sensing electrode 130A is electrically connected to the flexible printed circuit board.

It needs to be noted that, because many conductors are disposed inside the touch screen 20, the use of the sensing electrode 130A can allow capacitance to be generated between the handwriting elimination apparatus 100 in this application and the touch screen 20 when the handwriting elimination apparatus 100 approaches the touch screen 20. This process allows for interaction between the handwriting elimination apparatus 100 and the touch screen 20 with no other operations required, to enable an erasure function, making it more convenient to use.

It needs to be understood that, in an embodiment of this application, the sensing electrode 130A is used as a signal transmit end of the strain component 120. It may also be understood that the sensing electrode 130A is a signal transmit end of a capacitive sensor. A specific structure of the sensing electrode 130A is not limited. For example, the sensing electrode 130A may be a TX electrode.

When the handwriting elimination apparatus 100 performs a handwriting elimination action, the TX electrode approaches or contacts the touch screen 20, and a capacitance change occurs between the TX electrode and the touch screen 20. The capacitance change signal may be used as a trigger signal for enabling the erasure function.

The following describes a principle of operating the sensing electrode 130A.

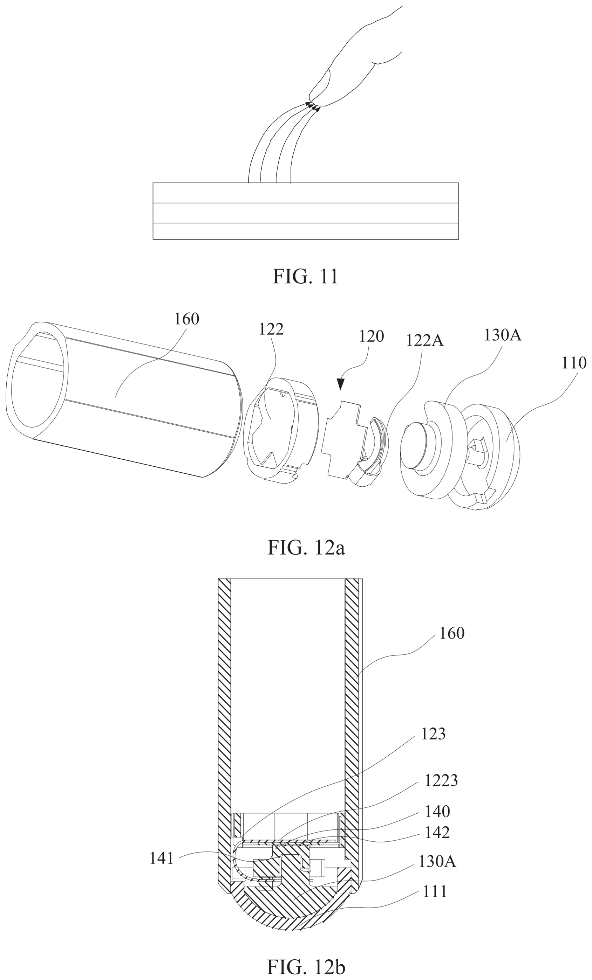

Specifically, FIG. 11 is a diagram of a principle of capacitive sensing. As shown in FIG. 11, capacitive sensing is a technique based on capacitive coupling. A human body acts as a conductor with capacitance between the human body and a sensor. When a finger approaches the sensor, the capacitance increases. An approaching action of a hand can be detected based on this effect. Similarly, when the sensing electrode is used in the handwriting elimination apparatus, there is similar sensing between the handwriting elimination apparatus and the screen of the electronic device.

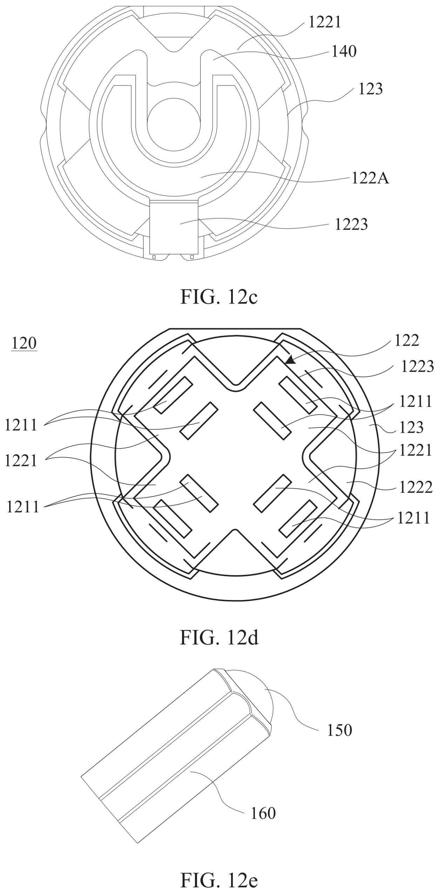

Refer to FIG. 12a to FIG. 12d. FIG. 12a is an exploded view of a structure of a handwriting elimination apparatus according to an embodiment of this application. FIG. 12b is a cross-sectional view of a structure of a handwriting elimination apparatus according to an embodiment of this application. FIG. 12c is a top view of a structure of a handwriting elimination apparatus according to an embodiment of this application. FIG. 12d is a diagram of a structure of a strain component according to an embodiment of this application.

As shown in FIG. 12a and FIG. 12b, in some implementations of this application, the handwriting elimination apparatus 100 may further include an insulating member 140, the insulating member 140 is disposed between the sensing electrode 130A and the strain sensing assembly 121, an end portion of the sensing electrode 130A fits into a groove 141 at a corresponding end portion of the insulating member 140, an end that is of the insulating member 140 and that is away from the sensing electrode 130A also forms a protruding structure 142 aligned with the geometric center point of the strain substrate 122, and the trigger portion 111 presses, when receiving a force, the strain substrate 122 of the strain sensing assembly 121 by using the protruding structure 142 of the insulating member 140.

It needs to be understood that the end portion of the sensing electrode 130A fits into the groove 141 at the corresponding end portion of the insulating member 140, and may be fastened to the groove 141 through adhesion on a contact surface. During assembly, a gasket may be further placed in the groove 141 to adjust a height of the sensing electrode 130A.

The sensing electrode 130A and the trigger portion 111 are integrated by an in-mold injection molding process or by adhesive bonding. The sensing electrode 130A may be bonded to an inner wall of an outer shell 160 for fastening, and an adhesive is injected into a gap to form a seamless structure.

The flexible printed circuit board 1223 is bonded to a bottom surface of the substrate member 1221, the insulating member 140 is bonded to a top of the substrate member 1221, and an end portion of the insulating member 140 is fastened to a step surface of a support 123. The flexible printed circuit board 1223 and the sensing electrode 130A are tightly pressed and electrically connected by using conductive foam 122A.

During use, an encoded signal on the flexible printed circuit board 1223 is transmitted to the sensing electrode 130A through the conductive foam 122A.

It needs to be understood that, in an embodiment of this application, the handwriting elimination apparatus 100 may include a mainboard integrated with a processor. The encoded signal is sent by the mainboard, passes through the flexible printed circuit board 1223 and the conductive foam 122A, and is finally transmitted to the sensing electrode 130A. Based on this signal, the electronic device 30 can find positions of points at which the handwriting elimination apparatus 100 slides on the touch screen 20, that is, determine an erasure position. Herein, an electrical connection scheme may alternatively be a scheme with spring contacts or conductive gel for conduction and fastening.

Further, it needs to be understood that, when the handwriting elimination apparatus 100 performs a handwriting elimination action, the TX electrode, that is, the sensing electrode 130A, approaches or contacts the touch screen 20, a capacitance change occurs between the TX electrode and the touch screen 20, and an erasure position and an erasure range on the touch screen 20 that roughly correspond to the trigger component 110 of the handwriting elimination apparatus 100 can be further determined roughly based on the capacitance change. In an embodiment of this application, the sensing electrode 130A is connected to the flexible printed circuit board 1223 by the conductive foam 122A. In this way, the mainboard in the handwriting elimination apparatus 100 can finally transmit an encoded signal to the sensing electrode 130A through the flexible printed circuit board 1223 and the conductive foam 122A. Therefore, an erasure position and an erasure range on the touch screen 20 that correspond to the trigger component 110 can be more accurately determined, improving performance of the handwriting elimination apparatus 100 in use.

Further, it needs to be understood that, when the handwriting elimination apparatus 100 is used in an electronic stylus pen, the mainboard may be a pen core mainboard of the electronic stylus pen, and an encoded signal on the flexible printed circuit board 1223 is transmitted to the sensing electrode 130A through the conductive foam 122A. The encoded signal is sent by the pen core mainboard, passes through the flexible printed circuit board 1223 and the conductive foam 122A, and is finally transmitted to the sensing electrode 130A. Based on this signal, the electronic device can find positions of points at which the handwriting elimination apparatus slides on the screen, that is, determine an erasure position and an erasure range.

As shown in FIG. 12c and FIG. 12d, the handwriting elimination apparatus 100 further includes a support 123, the support 123 has a hollow region or a recessed region, ends that are of the plurality of substrate members 1221 and that are away from the geometric center point are fastened to the support 123, and the other ends are connected to each other and are suspended in the hollow region or the recessed region of the support 123, to form an end-fixed beam structure.

Based on this configuration, a peripheral end of the substrate member 1221 is fastened, and a middle part deforms under a press force transferred thereto. The resistance strain gauge disposed on the substrate member 1221 can convert corresponding tiny deformation into an electrical signal.

It needs to be noted that, when the trigger component 110 receives a press force (which may be understood as a reaction force applied by the touch screen 20 to the trigger component 110), the trigger component 110 deforms, and the trigger component 110 transfers the press force sequentially to all the substrate members 1221 of the strain substrate 122. Because the other end of each substrate member 1221 (that is, an end that is of each substrate member 1221 and that is connected to the trigger component 110) is suspended, large deformation can occur in an axis direction of the pen cap. Each substrate member 1221 generates large deformation, so that the deformation can be better transferred to the strain sensing element 1211, resulting in high sensitivity of the strain sensing assembly 121.

FIG. 12e is an axonometric diagram of a structure of a handwriting elimination apparatus according to an embodiment of this application. In some implementations, as shown in FIG. 12a and FIG. 12e, an outer surface of the trigger portion 111 may be provided with a soft protective layer 150 that can protect the trigger portion 111.

Further, still with reference to FIG. 12e, the handwriting elimination apparatus 100 may further include an outer shell 160, the trigger component 110 and the strain component 120 are fastened into the outer shell 160, and the trigger portion 111 is partially exposed from the outer shell 160.

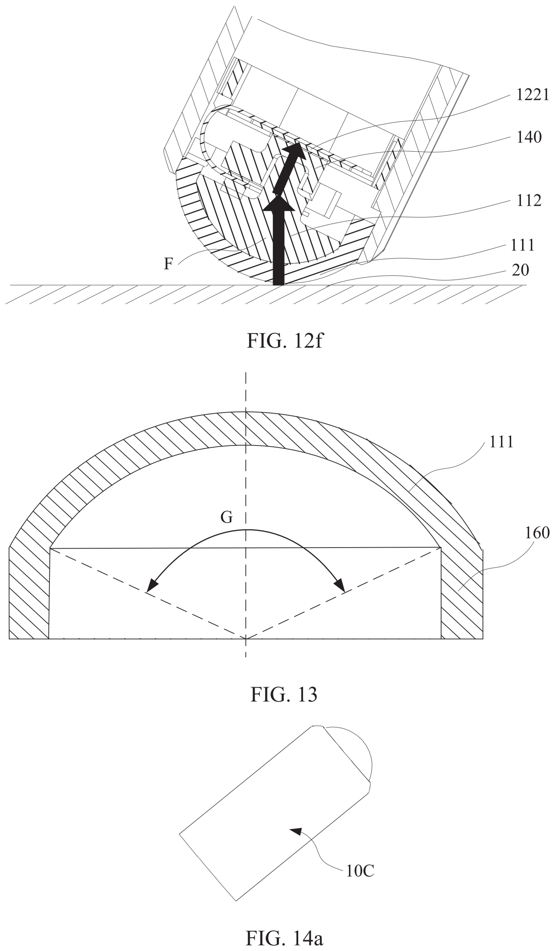

FIG. 12f is a diagram of a handwriting elimination apparatus in a use state according to an embodiment of this application. As shown in FIG. 12f, in an embodiment of this application, when the handwriting elimination apparatus performs a handwriting erasure action, a reaction force F applied by the touch screen 20 is transferred to the corresponding substrate member 1221 sequentially through the trigger portion 111, the press portion 112, and the insulating member 140.

Further, FIG. 13 is a partial cross-sectional view of a structure of a handwriting elimination apparatus according to an embodiment of this application. As shown in FIG. 13, in some embodiments of this application, a part that is of the trigger portion 111 and that is exposed from the outer shell 160 is of a spherical segment structure, and a central angle G of a cross-section of the spherical segment structure is in a range of 90° to 150°.

It needs to be noted that the trigger portion 111 is configured to be of the spherical segment structure, and the central angle G of the cross-section of the spherical segment structure is in the range of 90° to 150°. In this way, the handwriting elimination apparatus 100 in this application can have a large erasure range.

Further, it needs to be noted that, in an embodiment of this application, the central angle G of the cross-section of the spherical segment structure may be set to any angle in the range of 90° to 150°. For example, the central angle G of the cross-section of the spherical segment structure may be set to 90°, 125°, or 150°.

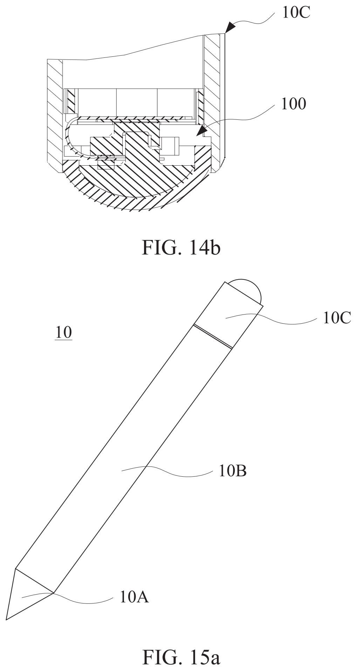

Refer to FIG. 14a and FIG. 14b. FIG. 14a is a diagram of an assembled structure of a pen cap according to an embodiment of this application. FIG. 14b is a cross-sectional view of a structure of a pen cap according to an embodiment of this application.

Refer to FIG. 14a and FIG. 14b. This application further provides a pen cap of an electronic stylus pen, where the pen cap 10C is disposed on a pen tail of the electronic stylus pen 10 and is configured to perform an erasure function of the electronic stylus pen; and the pen cap 10C includes the handwriting elimination apparatus 100 for the touch screen 20 with the foregoing structure.

It needs to be noted that the handwriting elimination apparatus 100 of the foregoing structure is integrated into the pen cap of the electronic stylus pen. When implementing a handwriting elimination function, the handwriting elimination apparatus 100 of the foregoing structure can achieve different degrees of erasure effect based on a magnitude of a press force, and can further implement multi-angle recognition for erasure. The use of this structure for the pen cap of the electronic stylus pen can improve functional diversity of the pen cap of the electronic stylus pen, and can further improve performance of the electronic stylus pen in use.

Further, it needs to be noted that, because the pen cap is integrated with the handwriting elimination apparatus 100 of the foregoing structure, a user can apply different magnitudes of press forces to the pen cap to achieve different degrees of erasure effect.

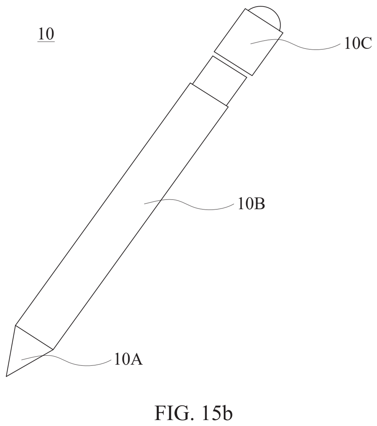

Refer to FIG. 15a and FIG. 15b. FIG. 15a is a diagram of an assembled structure of an electronic stylus pen according to an embodiment of this application. FIG. 15b is a cross-sectional view of a structure of an electronic stylus pen according to an embodiment of this application.

As shown in FIG. 15a and FIG. 15b, this application further provides an electronic stylus pen 10. The electronic stylus pen 10 includes a pen barrel 10B and a pen head 10A disposed at an end of the pen barrel, and further includes a pen cap 10C of the foregoing structure.

The pen cap 10C provided in embodiments of this application is not limited to being used with the electronic stylus pen. When the pen cap 10C is used with the electronic stylus pen, a housing of the electronic stylus pen may be used as a housing of the pen cap 10C.

Further, the pen cap 10C may also be used as a separate product and is removably connected to a pen tail of the pen barrel 10B.

It needs to be noted that, because the pen cap of the foregoing structure can implement different degrees of multi-angle recognition based on a magnitude of a press force, when handwriting on the touch screen 20 is eliminated, performance of the electronic stylus pen in use can be improved.

During use, when a user draws incorrect audio and video images due to accidental touches or some other unexpected cases, a handwriting elimination apparatus is required to eliminate the incorrect audio and video images. The electronic stylus pen 10 may be turned by 180°, so that the pen cap 10C of the electronic stylus pen 10 is in contact with the touch screen, and the pen cap 10C is used to eliminate the incorrect audio and video images. In this process, the user can apply different magnitudes of press forces to the pen cap to achieve different degrees of erasure effect.

Further, it needs to be noted that the pen cap is removably connected to the other end of the pen barrel. The pen cap can be used independently when implementing a handwriting elimination function, making it more convenient to use.

Specifically, a flange structure may be provided inside the housing of the pen cap 10A, a groove structure that matches the flange structure is provided at the tail of the pen barrel 10B, and the pen cap 10A is removably connected to the other end of the pen barrel 10B by the flange and the groove.

Refer to FIG. 16a to FIG. 16d. FIG. 16a is a block diagram of a principle of a handwriting elimination method according to an embodiment of this application. FIG. 16a' is a block diagram of another principle of a handwriting elimination method according to an embodiment of this application. FIG. 16b is a flowchart of a handwriting elimination method according to an embodiment of this application. FIG. 16c is a diagram of a scenario of a handwriting elimination method according to an embodiment of this application. FIG. 16d is a diagram of another scenario of a handwriting elimination method according to an embodiment of this application.

As shown in FIG. 16a to FIG. 16b, an embodiment of this application further provides a handwriting elimination method for a touch screen, where an erasure function is performed by using the electronic stylus pen of the foregoing structure or the pen cap of the electronic stylus pen of the foregoing structure. The handwriting elimination method for the touch screen includes the following steps:

The trigger portion 111 of the handwriting elimination apparatus 100 receives a feedback signal from the electronic device 30, in which the touch screen is used, that triggers the erasure function of the pen cap.

Detection is performed and electrical signal information indicating that the trigger portion 111 receives a force is sent.

Target pressure information of the pen cap is determined based on the electrical signal information, and the target pressure information is sent to the electronic device 30 (that is, a target electronic device), for the electronic device 30 to determine, based on the target pressure information, an erasure degree for handwriting displayed on the touch screen 20. Specifically, the target pressure information includes pressure magnitude information of the pen cap.

For example, as shown in FIG. 16c, when the pen cap 10C of the electronic stylus pen 10 presses the touch screen 20, the feedback signal may be understood as a reaction force applied by the touch screen 20 to the trigger portion 111. The pressure magnitude information is a magnitude of the reaction force.

When the trigger portion 111 is pressed under the reaction force, in an implementation, as shown in FIG. 3b, the reaction force is directly transferred to the strain sensing assembly 121 sequentially through the trigger portion 111 and the press portion 112. In this case, the strain sensing assembly 121 detects the reaction force and generates corresponding electrical signal information, where the electrical signal information may be voltage information indicating a magnitude of the reaction force.

Specifically, in this implementation, the strain sensing assembly 121 may be of the structure shown in FIG. 7a. The strain sensing assembly 121 includes a strain substrate 122 (for example, the strain steel sheet 1222), a flexible printed circuit board 1223 attached to a side that is of the strain substrate 122 and that faces away from the press portion 112, and a plurality of strain sensing elements (for example, the plurality of resistance strain gauges 1211A) attached to a surface of a first part of the flexible printed circuit board 1223. Each pair of resistance strain gauges 1211A on each substrate member 1221 and a corresponding pair of auxiliary resistors 1224 form a Wheatstone circuit. When the reaction force applied by the touch screen 20 to the trigger portion 111 is transferred to the strain sensing assembly 121, the strain steel sheet 1222 is pressed to deform, and a resistance value of the resistance strain gauge 1211A attached to the surface of the strain steel sheet 1222 through the flexible printed circuit board 1223 changes as the strain steel sheet 1222 deforms, so that the Wheatstone circuit formed by the resistance strain gauge 1211A and the auxiliary resistor 1224 outputs corresponding voltage information, where the voltage information may indicate a magnitude of the reaction force.

Alternatively, the strain sensing assembly 121 may be of the structure shown in FIG. 8a or FIG. 8b. Two pairs of resistance strain gauges 1211A on each substrate member 1221 are connected to each other to form a Wheatstone circuit. When the reaction force applied by the touch screen 20 to the trigger portion 111 is transferred to the strain sensing assembly 121, the strain steel sheet 1222 is pressed to deform, and a resistance value of the resistance strain gauge 1211A attached to the surface of the strain steel sheet 1222 through the flexible printed circuit board 1223 changes as the strain steel sheet 1222 deforms, so that the Wheatstone circuit formed by the two pairs of resistance strain gauges 1211A outputs corresponding voltage information, where the voltage information may indicate a magnitude of the reaction force.

In this implementation, the strain sensing assembly 121 may be a pressure sensor that directly detects a press force. The pressure sensor may be a micro pressure sensor common in the art, and a model thereof may be selected according to actual design and use requirements. This application does not impose a unique requirement on this.

In another implementation, as shown in FIG. 12f, the reaction force is transferred to the strain sensing assembly 121 sequentially through the trigger portion 111, the press portion 112, and the insulating member 140. In this case, the strain sensing assembly 121 detects the reaction force and generates corresponding electrical signal information, where the electrical signal information may be voltage information indicating a magnitude of the reaction force.

When a handwriting erasure action is performed according to the handwriting elimination method in this application, as shown in FIG. 16a and FIG. 16c, the electronic stylus pen 10 may be turned by 180°, so that the pen cap 10C of the electronic stylus pen 10 is in contact with and moves relative to the touch screen 20, and then the handwriting erasure action is implemented.

In this implementation, the electronic stylus pen 10 may include a processor 10D. The processor 10D may include storage and processing circuits configured to support operations of the electronic stylus pen 10. The storage and processing circuits may include a storage apparatus such as a non-volatile memory (for example, a flash memory or another electrically programmable read-only memory constructed as a solid-state drive), a volatile memory (for example, a static or dynamic random access memory), and the like. The processing circuit in the processor 10D may be configured to control operations of the electronic stylus pen 10. The processing circuit may be based on one or more microprocessors, a microcontroller, a digital signal processor, a baseband processor, a power supply management unit, an audio chip, an application-specific integrated circuit, and the like.

The processor 10D may be configured to run software that is on the electronic stylus pen 10 and that controls operations of the electronic stylus pen 10. In an operation process of the electronic stylus pen 10, the software running on the processor 10D may process a sensor input, a button input, and an input from another apparatus to monitor movement of the electronic stylus pen 10 and another user input. The software running on the processor 10D may detect a user command and may communicate with the electronic device 30.

To support wireless communication between the electronic stylus pen 10 and the electronic device 30, the electronic stylus pen 10 may include a wireless module 10E. The wireless module 10E may be a type of the signal transmission component. The wireless module 10E may be a Bluetooth module, or the wireless module 10E may be a Wi-Fi hotspot module, a Wi-Fi peer-to-peer module, or the like. The Bluetooth module may include a radio frequency transceiver, for example, a transceiver. The Bluetooth module may also include one or more antennas. The transceiver may transmit and/or receive a wireless signal by using an antenna. The wireless signal is based on a type of the wireless module, and may be a Bluetooth signal, a wireless local area network signal, a remote signal such as a cellular phone signal, a near-field communication signal, or another wireless signal. The electronic stylus pen 10 may further include a charging module. The charging module can support charging of the electronic stylus pen 10 to supply power to the electronic stylus pen 10.

In this application, the strain sensing assembly 121 and the processor 10D are in a communication connection, which may be a wired communication connection or a wireless communication connection. When the strain sensing assembly 121 outputs the voltage information indicating the target pressure information, the processor 10D obtains the target pressure information and sends the corresponding target pressure information to the electronic device 30 by using the wireless module 10E.

The electronic device 30 may further include a wireless interface 30C to facilitate electronic communication between the electronic device 30 and the electronic stylus pen 10. The wireless interface 30C of the electronic device 30 receives the target pressure information. In an implementation, the electronic device 30 may be configured to communicate with the electronic stylus pen 10 through a low-energy Bluetooth communication interface or a near-field communication interface. In another example, a communication interface facilitates electronic communication between the electronic device 30 and an external communication network, device, or platform.

The wireless interface 30C (regardless of a communication interface between the electronic device 30 and the electronic stylus pen 10 or another communication interface) may be implemented as one or more wireless interfaces, a Bluetooth interface, a near-field communication interface, a magnetic interface, a universal serial bus interface, an inductive interface, a resonant interface, a capacitive coupling interface, a Wi-Fi interface, a TCP/IP interface, a network communication interface, an optical interface, an acoustic interface, or any conventional communication interface.

The electronic device 30 further includes a processor 30A, an erasure module 30B, and a display 30D (for example, the touch screen 20 may be used). The processor 30A is separately in a communication connection with the erasure module 30B and the wireless interface 30C, obtains the target pressure information, controls, based on the target pressure information, the erasure module 30B to perform corresponding handwriting elimination, and controls the display 30D to display an erasure effect interface with which a user can interact.

As shown in FIG. 16a' and FIG. 16d, alternatively, the pen cap 10C may be used as a product independent of the electronic stylus pen to perform a handwriting erasure action. The pen cap 10C is in contact with and moves relative to the touch screen 20, and then handwriting erasure is implemented.

In this implementation, the pen cap 10C may include a processor 101D independent of the processor 10D of the electronic stylus pen 10. The processor 101D may include storage and processing circuits configured to support operations of the pen cap 10C. The storage and processing circuits may include a storage apparatus such as a non-volatile memory (for example, a flash memory or another electrically programmable read-only memory constructed as a solid-state drive), a volatile memory (for example, a static or dynamic random access memory), and the like. The processing circuit in the processor 101D may be configured to control operations related to the pen cap 10C. The processor 101D may be integrated with the strain sensing assembly 121, or may be disposed at another position of the pen cap 10C. The processing circuit may be based on one or more microprocessors, a microcontroller, a digital signal processor, a baseband processor, a power supply management unit, an audio chip, an application-specific integrated circuit, and the like.

The processor 101D may be configured to run software that is on the pen cap 10C and that controls operations of the pen cap 10C. In an operation process of the pen cap 10C, the software running on the processor 101D may process a sensor input, a button input, and an input from another apparatus to monitor movement of the pen cap 10C and another user input. The software running on the processor 101D may detect a user command and may communicate with the electronic device 30.

To support wireless communication between the pen cap 10C and the electronic device 30, the pen cap 10C may include a wireless module 101E. The wireless module 101E may be a type of the signal transmission component. The wireless module 101 may be a Bluetooth module, or may be a Wi-Fi hotspot module, a Wi-Fi peer-to-peer module, or the like. The Bluetooth module may include a radio frequency transceiver, for example, a transceiver. A specific form of the Bluetooth module may be described as above, and details are not described herein again.

In this application, the strain sensing assembly 121 and the processor 101D are in a communication connection, which may be a wired communication connection or a wireless communication connection. When the strain sensing assembly 121 outputs the voltage information indicating the target pressure information, the processor 10D obtains the target pressure information and sends the corresponding target pressure information to the electronic device 30 by using the wireless module 101E.

The wireless interface 30C of the electronic device 30 may be a communication interface between the electronic device 30 and the pen cap 10C, or may be another communication interface.

It needs to be noted that, in the foregoing implementations, in the handwriting elimination method, the erasure degree for the handwriting displayed on the touch screen can be determined based on the pressure magnitude information of the pen cap, so that when a handwriting elimination function is performed by using the pen cap, different erasure effects can be achieved based on different magnitudes of erasure forces.

In some embodiments, the strain sensing assembly 121 includes a strain substrate 122 and a plurality of strain sensing elements 1211, and all the strain sensing elements 1211 are disposed on the strain substrate 122; and the plurality of strain sensing elements 1211 generate a plurality of pieces of electrical signal information based on a press force applied by the press portion 112, determine the target pressure information of the pen cap based on the plurality of pieces of electrical signal information, and send the target pressure information to the electronic device 30, for the electronic device 30 to determine the erasure degree based on the target pressure information.

It needs to be noted that the target pressure information of the pen cap is determined based on the plurality of pieces of electrical signal information. In this way, accuracy of the target pressure information can be ensured. Even when an error occurs in a piece of electrical signal information, this method can reduce impact on the target pressure information.

Refer to FIG. 17a to FIG. 17c. FIG. 17a is a diagram of a bridge circuit according to an embodiment of this application. FIG. 17b is a diagram of a model of a pen cap according to an embodiment of this application. FIG. 17c is a diagram of force analysis on a point of a pen cap according to an embodiment of this application. As shown in FIG. 17a and FIG. 17b, the plurality of strain sensing elements 1211 correspond to N Wheatstone bridge circuits, each Wheatstone bridge circuit outputs one bridge voltage, and the plurality of pieces of electrical signal information are N bridge voltages output by the N Wheatstone bridge circuits.

That the pressure magnitude information of the pen cap is determined based on the plurality of pieces of electrical signal information includes the following steps:

Current angle information (which may be understood as $\theta$ in formula 4) of the pen cap is determined based on the N bridge voltages. The current angle information is an included angle between a direction of the reaction force applied by the touch screen 20 to the trigger portion 111 and an axial direction of the pen cap.

Current voltage information (which may be understood as Vmax in formula 5) is determined based on the N bridge voltages and the current angle information.

The pressure magnitude information (which may be understood as F in formula 5) is determined based on the current voltage information and calibration information, where the calibration information indicates a one-to-one correspondence between different voltage information and different pressure information (which may be understood as a relationship between Vmax and F) corresponding to a case in which the pen cap receives a force at a calibration angle, and the calibration angle is configured as an angle corresponding to a case in which a force direction of the pen cap coincides with the axis of the pen cap.

It needs to be noted that the current angle information of the pen cap is determined based on the N bridge voltages, the current voltage information is determined based on the N bridge voltages and the current angle information, and the pressure magnitude information is determined based on the current voltage information and the calibration information. In this way, erasure effect can be compensated based on different tilt angles of the pen cap (or this may be understood as that the tilt angle is calculated to provide compensation for an algorithm), so that the need for a large erasure force due to a weak signal at an edge of the pen cap is avoided, and consistent erasure effect can be achieved at different tilt angles under a same press force. This also helps improve accuracy of performing a handwriting erasure action on the touch screen. Alternatively, it may be understood that, even when an erasure action is performed at an angle tilted relative to the axis of the pen cap, the target pressure information can more accurately indicate an actual magnitude of the press force.

It needs to be understood that, in this application, a mathematical model is preset in the processor. When an erasure action is performed, and a force-applying direction of the trigger portion 111 is tilted relative to the axis of the pen cap, the processor compensates a detected value by using the mathematical model to obtain more accurate target pressure information, thereby achieving erasure effect matching the magnitude of the press force.

The following describes a manner of constructing the mathematical model.

As shown in FIG. 17c, in a case that an erasure action is performed by using the pen cap, when the pen cap receives a force $F$ at a point, the force may be resolved into $F_{xy}$ and $F_z$, and an included angle $\theta$ between the force $F$ and the axial direction of the pen cap may be calculated according to the following formula 1:

$$\text{formula 1:} \qquad \theta = \alpha\tan\frac{F_{xy}}{F_z}$$

$F_{xy}$ is a horizontal component of $F$, and $F_z$ is a vertical component of $F$. Forces in all directions and quantities of electrical signals are correlated one-to-one to obtain formula 2 and formula 3:

$$\text{formula 2:} \qquad F_{xy} = K_2\sqrt{\sum_{i}^{N/2}(V_{2i-1} - V_{2i})^2}$$

$V_{2i-1}$ and $V_{2i}$ respectively represent current bridge voltages output by two opposite Wheatstone bridge circuits, for example, $V_1$ and $V_3$, as well as $V_2$ and $V_4$ that are shown in FIG. 17a, and $K_2$ is a correction coefficient. It can be learned that the horizontal component $F_{xy}$ is positively correlated with a square root of a sum of squares of differences between quantities of signals on bridge arms.

$$\text{formula 3:} \qquad F_z = K_1\sum_{i}^{N}V_i$$

$V_i$ represents a bridge voltage of a corresponding bridge. It can be learned that the vertical component $F_z$ is positively correlated with a sum of quantities of signals on bridge arms.

$1 \le i \le N$; and $K_1$ is a correction coefficient.

Formula 4 can be obtained based on formula 2 and formula 3:

$$\text{formula 4:} \qquad \theta == \alpha\tan\frac{K\sqrt{\sum_{i}^{N/2}(V_{2i-1} - V_{2i})^2}}{\sum_{i}^{N}V_i}$$

It can be learned that the included angle $\theta$ between the current force direction of the pen cap and the axis of the pen cap can be calculated according to the foregoing formula 4, where $\theta$ represents an included angle between a current force direction of the pen cap and an axis of the pen cap; $1 \le i \le N$; and K is a ratio of $K_2$ and $K_1$, and is a constant.

Therefore, the press force F corresponding to the target pressure information can be calculated according to formula 5:

$$\text{formula 5:} \qquad V(F)_{max} == \frac{\sum_{i}^{N}V_i}{\cos\theta}$$

Further, in an embodiment of this application, five positions shown in FIG. 17b are specifically selected, a difference between two adjacent load angles is 15°, and an angle is estimated according to the foregoing formulas with a load voltage Vs of 2.8 V. For details, see the following table:

| Load angle | V1 (uV) | V2 (uV) | V3 (uV) | V4 (uV) | Angle estimated according to the foregoing formulas (K = 3.5) | Deviation |
|---|---|---|---|---|---|---|
| 0° | 456.61 | 454.85 | 454.14 | 454.28 | 0.2° | - |
| 15° | 444.78 | 433.63 | 373.04 | 501.85 | 14.5° | 3.6% |
| 30° | 399.47 | 379.72 | 263.40 | 512.06 | 29.3° | 2.3% |
| 45° | 317.05 | 290.07 | 125.86 | 477.63 | 45.6° | 1.2% |
| 60° | 136.83 | 106.04 | 87.39 | 327.55 | 65.7° | 8.7% |

It can be learned from the foregoing table that:

When the load angle is 0° (corresponding to position 1), V1 is 456.61 uV, V2 is 454.85 uV, V3 is 454.14 uV, V4 is 454.28 uV, the correction coefficient K is 3.5, and the estimated angle is 0.2°.

When the load angle is 15° (corresponding to position 2), V1 is 456.61 uV, V2 is 433.63 uV, V3 is 373.04 uV, V4 is 501.85 uV, the correction coefficient K is 3.5, the load voltage Vs is 2.8 V, the estimated angle is 14.5°, and the deviation reaches 3.6%.

When the load angle is 30° (corresponding to position 3), V1 is 399.47 uV, V2 is 379.72 uV, V3 is 263.40 uV, V4 is 512.06 uV, the correction coefficient K is 3.5, the load voltage Vs is 2.8 V, the estimated angle is 29.3°, and the deviation reaches 2.3%.

When the load angle is 45° (corresponding to position 4), V1 is 317.05 uV, V2 is 290.07 uV, V3 is 125.86 uV, V4 is 477.63 uV, the correction coefficient K is 3.5, the load voltage Vs is 2.8 V, the estimated angle is 45.6°, and the deviation reaches 1.2%.

When the load angle is 60° (corresponding to position 5), V1 is 136.83 uV, V2 is 106.04 uV, V3 is 87.39 uV, V4 is 327.55 uV, the correction coefficient K is 3.5, the load voltage Vs is 2.8 V, the estimated angle is 65.7°, and the deviation reaches 8.7%.

It can be learned from the foregoing analysis that, based on embodiments of this application, the obtained current angle information is more accurate, and a deviation angle can be compensated.

In some embodiments, before the feedback signal is received from the electronic device that triggers the erasure function, the method further includes: sending a trigger signal for enabling the erasure function.

In an example, the handwriting elimination apparatus 100 is provided with a sensing electrode 130A. When the handwriting elimination apparatus 100 performs a handwriting elimination action, a capacitance change occurs between the sensing electrode 130A of the handwriting elimination apparatus 100 and the touch screen 20, and the capacitance change signal may be used as a trigger signal for enabling the erasure function.

It needs to be noted that an encoded signal may be finally transmitted to the sensing electrode 130A through the flexible printed circuit board 1223 and the conductive foam 122A by using the processor, so that an erasure position and an erasure range on the touch screen 20 that correspond to the trigger component 110 can be determined.

In the foregoing examples, a person skilled in the art can readily understand other advantages and effects of this application based on the content disclosed in this specification. Although this application is described with reference to some embodiments, it does not mean that features of this application are limited only to this implementation. On the contrary, a purpose of describing this application with reference to an implementation is to cover another option or modification that may be derived based on claims of this application. To provide an in-depth understanding of this application, the following descriptions include a plurality of specific details. This application may be alternatively implemented without using these details. In addition, to avoid confusion or blurring a focus of this application, some specific details are omitted from the descriptions. It should be noted that embodiments in this application and features in embodiments may be mutually combined in the case of no conflict.

It should be noted that, in this specification, similar reference numerals and letters in the following accompanying drawings represent similar items. Therefore, once an item is defined in an accompanying drawing, the item does not need to be further defined or interpreted in following accompanying drawings.

In descriptions of this application, it should be noted that orientation or position relationships indicated by terms "center", "above", "below", "left", "right", "vertical", "horizontal", "inner", "outer", and the like are orientation or position relationships based on the accompanying drawings, and are merely intended for conveniently describing this application and simplifying descriptions, rather than indicating or implying that an apparatus or element in question needs to have a specific orientation or needs to be constructed and operated in a specific orientation, and therefore cannot be construed as a limitation on this application. In addition, terms "first" and "second" are merely used for a purpose of description, and shall not be understood as an indication or implication of relative importance.

In descriptions of this application, it should be noted that, unless otherwise expressly specified and limited, terms "mount", "interconnect", and "connect" should be understood in a broad sense. For example, the terms may indicate a fixed connection, a detachable connection, or an integral connection; or may indicate a mechanical connection or an electrical connection; or may indicate direct interconnection, indirect interconnection through an intermediate medium, or communication between interiors of two elements. A person of ordinary skill in the art may understand specific meanings of the foregoing terms in this application according to specific cases.

In descriptions of this application, it should be understood that, in this application, an "electrical connection" may be understood as physical contact and electrical conduction of components, or may be understood as a form in which different components in a circuit structure are connected through a physical line that can transmit an electrical signal, such as printed circuit board (printed circuit board, PCB) copper foil or a conducting wire. A "communication connection" may indicate electrical signal transmission, and includes a wireless communication connection and a wired communication connection. The wireless communication connection does not require a physical medium and does not belong to a connection relationship that defines a construction of a product.

It is clearly that a person skilled in the art can make various modifications and variations to this application without departing from the spirit and scope of this application. This application is intended to cover these modifications and variations of this application provided that they fall within the scope of the claims of this application and their equivalent technologies.

## Claims

1. A handwriting elimination apparatus for a touch screen, wherein the handwriting elimination apparatus comprises:

    a trigger component, wherein the trigger component comprises a trigger portion in contact with the touch screen, and a press portion disposed on an inner side of the trigger portion; and
    a strain component, wherein the strain component comprises a strain sensing assembly opposite to the press portion, wherein
    the trigger portion is in contact with the touch screen and receives a force, and presses the strain sensing assembly through the press portion, the strain sensing assembly undergoes deformation under a press force applied by the press portion and generates an erasure signal corresponding to the deformation, and the erasure signal is for eliminating handwriting displayed on the touch screen.

2. The handwriting elimination apparatus for the touch screen according to claim 1, wherein the strain sensing assembly comprises a strain substrate and a plurality of strain sensing elements, and the plurality of strain sensing elements are disposed on the strain substrate, wherein

    the plurality of strain sensing elements are located in a same plane, a plane parallel to the plane in which the plurality of strain sensing elements are located is used as a projection plane, and the plurality of strain sensing elements are evenly arrayed in the projection plane; and
    a projection of the press portion on the projection plane is located in an outer contour of projections of the plurality of strain sensing elements on the projection plane.

3. The handwriting elimination apparatus for the touch screen according to claim 2, wherein the strain substrate is of a centrosymmetric structure as a whole; and
   the press portion is configured as a protrusion structure protruding from the inner side of the trigger portion, a protrusion direction of the protrusion structure is perpendicular to the strain substrate, and a projection point of a geometric center of an end portion of the protrusion structure on the projection plane coincides with a geometric center point of the strain substrate.

4. The handwriting elimination apparatus for the touch screen according to claim 2 or 3, wherein the strain substrate comprises a plurality of substrate members disposed in pairs, and the plurality of substrate members are evenly arranged around the geometric center point of the strain substrate; and
   every two strain sensing elements in the plurality of strain sensing elements form a pair of strain sensing elements, wherein at least one pair of strain sensing elements is attached to each substrate member in the plurality of substrate members.

5. The handwriting elimination apparatus for the touch screen according to claim 4, wherein each strain sensing element in the plurality of strain sensing elements is configured as a resistance strain gauge, one pair of resistance strain gauges is attached to each substrate member in the plurality of substrate members, and the pair of the resistance strain gauges on each substrate member is electrically connected to a corresponding pair of auxiliary resistors, to form a Wheatstone bridge circuit.

6. The handwriting elimination apparatus for the touch screen according to claim 4, wherein each strain sensing element in the plurality of strain sensing elements is configured as a resistance strain gauge, two pairs of resistance strain gauges are attached to each substrate member in the plurality of substrate members, and the two pairs of resistance strain gauges are electrically connected to form a Wheatstone bridge circuit; and

the two pairs of resistance strain gauges in each Wheatstone bridge are arranged annularly or side by side.

7. The handwriting elimination apparatus for the touch screen according to any one of claims 2 to 6, wherein the strain substrate is configured as a strain steel sheet.

8. The handwriting elimination apparatus for the touch screen according to any one of claims 2 to 7, wherein the strain sensing assembly further comprises a flexible printed circuit board, the flexible printed circuit board comprises a first part and a second part, the first part is stacked with the strain substrate and is attached to a side that is of the strain substrate and that faces away from the press portion, each strain sensing element in the plurality of strain sensing elements is attached to a surface that is of the first part and that faces away from the strain substrate, for the plurality of strain sensing elements to be disposed on the strain substrate by using the first part of the flexible printed circuit board, and the second part is bent and extends toward a side of the first part and is located outside the strain substrate.

9. The handwriting elimination apparatus for the touch screen according to claim 8, wherein when the Wheatstone bridge circuit is formed in the handwriting elimination apparatus, the auxiliary resistor of the Wheatstone bridge circuit is disposed on the second part of the flexible printed circuit board.

10. The handwriting elimination apparatus for the touch screen according to any one of claims 1 to 9, wherein the handwriting elimination apparatus further comprises a signal transmission component, and the signal transmission component is configured to send the erasure signal to an electronic device in which the touch screen is used.

11. The handwriting elimination apparatus for the touch screen according to any one of claims 1 to 10, wherein the handwriting elimination apparatus further comprises a sensing electrode, the sensing electrode forms the press portion, and when the handwriting elimination apparatus comprises the flexible printed circuit board, the sensing electrode is electrically connected to the second part of the flexible printed circuit board.

12. The handwriting elimination apparatus for the touch screen according to claim 11, wherein the handwriting elimination apparatus further comprises an insulating member, the insulating member is disposed between the sensing electrode and the strain sensing assembly, an end portion of the sensing electrode fits into a groove at a corresponding end portion of the insulating member, an end that is of the insulating member and that is away from the sensing electrode also forms a protruding structure aligned with the geometric center point of the strain substrate of the strain sensing assembly, and the trigger portion presses, when receiving a force, the strain substrate by using the protruding structure of the insulating member.

13. The handwriting elimination apparatus for the touch screen according to any one of claims 4 to 6, wherein the strain component further comprises a support, the support has a hollow region or a recessed region, one end that is of each substrate member in the plurality of substrate members and that is away from the geometric center point is fastened to the support, and the other ends are connected to each other and are suspended in the hollow region or the recessed region of the support, to form an end-fixed beam structure.

14. The handwriting elimination apparatus for the touch screen according to any one of claims 1 to 13, wherein an outer surface of the trigger portion is provided with a soft protective layer.

15. The handwriting elimination apparatus for the touch screen according to any one of claims 1 to 14, wherein the handwriting elimination apparatus further comprises an outer shell, the trigger component and the strain component are fastened into the outer shell, and the trigger portion is partially exposed from the outer shell.

16. The handwriting elimination apparatus for the touch screen according to claim 15, wherein a part that is of the trigger portion and that is exposed from the outer shell is of a spherical segment structure, and a central angle of a cross-section of the spherical segment structure is in a range of 90° to 150°.

17. A pen cap of an electronic stylus pen, wherein the pen cap is disposed on a pen tail of the electronic stylus pen and is configured to perform an erasure function of the electronic stylus pen, wherein the pen cap comprises the handwriting elimination apparatus for the touch screen according to any one of claims 1 to 16.

18. An electronic stylus pen, comprising a pen barrel and a pen head disposed at one end of the pen barrel, and further comprising the pen cap according to claim 17, wherein the pen cap is removably connected to the other end of the pen barrel.

19. A handwriting elimination method for a touch screen, wherein an erasure function is performed by using the pen cap of the electronic stylus pen according to claim 17 or the electronic stylus pen according to claim 18, and the handwriting elimination method for the touch screen comprises:

> receiving a feedback signal from an electronic device, in which the touch screen is used, that triggers the erasure function of the pen cap;
> performing detection and sending electrical signal information indicating that the trigger portion receives a force; and
> determining target pressure information of the pen cap based on the electrical signal information, and sending the target pressure information to the electronic device, for the electronic device to determine, based on the target pressure information, an erasure degree for handwriting displayed on the touch screen, wherein the target pressure information comprises pressure magnitude information of the pen cap.

20. The handwriting elimination method for the touch screen according to claim 19, wherein the strain sensing assembly comprises a strain substrate and a plurality of strain sensing elements, and the plurality of strain sensing elements are disposed on the strain substrate; and the plurality of strain sensing elements generate a plurality of pieces of electrical signal information based on a press force applied by the press portion, determine the target pressure information of the pen cap based on the plurality of pieces of electrical signal information, and send the target pressure information to the electronic device, for the electronic device to determine the erasure degree based on the target pressure information.

21. The handwriting elimination method for the touch screen according to claim 20, wherein the plurality of strain sensing elements correspond to N Wheatstone bridge circuits, each Wheatstone bridge circuit outputs one bridge voltage, and the plurality of pieces of electrical signal information are N bridge voltages output by the N Wheatstone bridge circuits.

22. The handwriting elimination method for the touch screen according to claim 21, wherein that the pressure magnitude information of the pen cap is determined based on the plurality of pieces of electrical signal information comprises:

> determining current angle information of the pen cap based on the N bridge voltages, wherein the current angle information is calculated according to the following formula:

$$\theta = a \tan \frac{K \sqrt{\sum_{i}^{N/2}(V_{2i-1} - V_{2i})^2}}{\sum_{i}^{N} V_i} \; ,$$

> wherein
> $\theta$ represents an included angle between a current force direction of the pen cap and an axis of the pen cap; $V_{2i-1}$ and $V_{2i}$ respectively represent current bridge voltages output by two opposite Wheatstone bridge circuits, $1 \le i \le N$; and K is a correction coefficient;
> determining current voltage information based on the N bridge voltages and the current angle information; and
> determining the pressure magnitude information based on the current voltage information and calibration information, wherein the calibration information indicates a one-to-one correspondence between different voltage information and different pressure information corresponding to a case in which the pen cap receives a force at a calibration angle, and the calibration angle is configured as an angle corresponding to a case in which a force direction of the pen cap coincides with the axis of the pen cap.

23. The handwriting elimination method for the touch screen according to any one of claims 19 to 22, wherein before the feedback signal is received from the electronic device that triggers the erasure function, the method further comprises:

sending a trigger signal for enabling the erasure function.

FIG. 1a

FIG. 1b

FIG. 2

FIG. 3a

FIG. 3b

FIG. 3c

112

123

121

FIG. 3d

121

122

1211

1211

1221

1221

1211

1211

FIG. 4a

112

1121

B

A

120

FIG. 4b

FIG. 5a

FIG. 5b

FIG. 5c

FIG. 5d

121

122
1223
1223A
1211A
1221
1222
1211A

1211A

1221

1211A

FIG. 6a

1223

1223A

1223B

FIG. 6b

FIG. 7a

FIG. 7b

FIG. 7c

122              1211A

1211A

1221           1211A

1211A

FIG. 8a

122            1211A

1221           1211A

1211A

1211A

FIG. 8b

FIG. 8c

FIG. 9a

FIG. 9b

Piezoresistive element deformation and direction

Y axis

Pulling direction

Resistance: large

Resistance: small

Small

Large

X axis

Y axis

Deformation

Large

FIG. 9c

111

112

130A

1223

FIG. 10

FIG. 11

FIG. 12a

FIG. 12b

FIG. 12c

FIG. 12d

FIG. 12e

1221

140

112

111

20

F

FIG. 12f

111

160

G

FIG. 13

10C

FIG. 14a

10C

100

FIG. 14b

10

10C

10B

10A

FIG. 15a

10

10C

10B

10A

FIG. 15b

FIG. 16a

```
┌─────────────────────────────────────────────────────────────┐
│                                                  Pen cap      │
│   ┌─────────────────────────────────────────┐    10C         │
│   │        Strain sensing assembly           │               │
│   │                121                        │               │
│   └─────────────────────────────────────────┘               │
│                        │                                      │
│                        ▼                                      │
│   ┌─────────────────────────────────────────┐               │
│   │             Processor                     │               │
│   │               101D                        │               │
│   └─────────────────────────────────────────┘               │
│                        │                                      │
│                        ▼                                      │
│   ┌─────────────────────────────────────────┐               │
│   │          Wireless module                  │               │
│   │               101E                        │               │
│   └─────────────────────────────────────────┘               │
└─────────────────────────────────────────────────────────────┘
                         ▲│
                         │▼
┌─────────────────────────────────────────────────────────────┐
│   ┌─────────────────────────────────────────┐   Electronic   │
│   │          Wireless interface               │    device     │
│   │                30C                        │     30        │
│   └─────────────────────────────────────────┘               │
│                        │                                      │
│                        ▼                                      │
│   ┌─────────────────────────────────────────┐               │
│   │             Processor                     │               │
│   │                30A                        │               │
│   └─────────────────────────────────────────┘               │
│            │                         │                        │
│            ▼                         ▼                        │
│   ┌──────────────┐          ┌──────────────┐                 │
│   │   Erasure    │          │   Display    │                 │
│   │   module     │          │    30D       │                 │
│   │    30B       │          │              │                 │
│   └──────────────┘          └──────────────┘                 │
└─────────────────────────────────────────────────────────────┘
```

FIG. 16a'

Receive a feedback signal from an electronic device, in which a touch screen is used, that triggers an erasure function of a pen cap

Perform detection and send electrical signal information indicating that a trigger portion receives a force

Determine target pressure information of the pen cap based on the electrical signal information, and send the target pressure information to a target electronic device, for the target electronic device to determine, based on the target pressure information, an erasure degree for handwriting displayed on the touch screen

FIG. 16b

10A

10

10B

20

111

10C

FIG. 16c

FIG. 16d

FIG. 17a

FIG. 17b

FIG. 17c

## INTERNATIONAL SEARCH REPORT

| International application No. |
| --- |
| **PCT/CN2024/100368** |

| A. | CLASSIFICATION OF SUBJECT MATTER |
| --- | --- |

G06F 3/04883(2022.01)i; G06F 3/04845(2022.01)i; G06F 3/044(2006.01)i

According to International Patent Classification (IPC) or to both national classification and IPC

| B. | FIELDS SEARCHED |
| --- | --- |

Minimum documentation searched (classification system followed by classification symbols)

    IPC: G06F

Documentation searched other than minimum documentation to the extent that such documents are included in the fields searched

Electronic data base consulted during the international search (name of data base and, where practicable, search terms used)

    CNABS; CNTXT; CNKI; WPABS; DWPI; EPTXT; USTXT; WOTXT: 屏幕, 笔, 压力, 力度, 擦除, 板擦, 应变, 电阻, 惠斯通, 惠斯同, 惠思登, 电桥, screen, stylus, pencil, pressure, force, erasure, erase, strain, gage, gauge, resistance, wheatstone, bridge

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 107145248 A (GUANGZHOU CVTOUCH ELECTRONICS SCIENCE & TECHNOLOGY CO., LTD.) 08 September 2017 (2017-09-08) description, paragraphs [0024]-[0059], and figure 1 | 1-3, 7-11, 14-21, 23 |
| Y | CN 113661383 A (WACOM CO., LTD.) 16 November 2021 (2021-11-16) description, paragraphs [0050]-[0202], and figures 1-3 | 1-3, 7-11, 14-21, 23 |
| A | CN 107145248 A (GUANGZHOU CVTOUCH ELECTRONICS SCIENCE & TECHNOLOGY CO., LTD.) 08 September 2017 (2017-09-08) description, paragraphs [0024]-[0059], and figure 1 | 4-6, 12, 13, 22 |
| A | CN 113661383 A (WACOM CO., LTD.) 16 November 2021 (2021-11-16) description, paragraphs [0050]-[0202], and figures 1-3 | 4-6, 12, 13, 22 |
| A | CN 101727218 A (BEIJING IE-MARK TECHNOLOGY CO., LTD.) 09 June 2010 (2010-06-09) entire document | 1-23 |
| A | CN 113268173 A (HONOR TERMINAL CO., LTD.) 17 August 2021 (2021-08-17) entire document | 1-23 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 August 2024** | **31 August 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/100368** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 115617188 A (HONOR TERMINAL CO., LTD.) 17 January 2023 (2023-01-17) entire document | 1-23 |

Form PCT/ISA/210 (second sheet) (July 2022)

| INTERNATIONAL SEARCH REPORT<br>Information on patent family members | | | | International application No.<br>**PCT/CN2024/100368** | | | |

| Patent document<br>cited in search report | | | Publication date<br>(day/month/year) | Patent family member(s) | | | Publication date<br>(day/month/year) |
|---|---|---|---|---|---|---|---|
| CN | 107145248 | A | 08 September 2017 | None | | | |
| CN | 113661383 | A | 16 November 2021 | WO | 2020202662 | A1 | 08 October 2020 |
| | | | | US | 2022018725 | A1 | 20 January 2022 |
| | | | | US | 12025523 | B2 | 02 July 2024 |
| | | | | JP | 7337148 | B2 | 01 September 2023 |
| | | | | CN | 113661383 | B | 09 April 2024 |
| CN | 101727218 | A | 09 June 2010 | WO | 2011091752 | A1 | 04 August 2011 |
| CN | 113268173 | A | 17 August 2021 | CN | 113268173 | B | 08 July 2022 |
| CN | 115617188 | A | 17 January 2023 | CN | 115617188 | B | 23 May 2023 |

Form PCT/ISA/210 (patent family annex) (July 2022)

**REFERENCES CITED IN THE DESCRIPTION**

**Patent documents cited in the description**

- CN 202310776953